# EUROPEAN PATENT APPLICATION

(11) **EP 4 666 901 A2**
(43) Date of publication of application: **24.12.2025**
(21) Application number: 25183259.8
(22) Date of filing: 17.06.2025
(51) Int. Cl.: A44B 11/25

(54) **BUCKLE**

(30) Priority: 17.06.2024 CN 202410780836; 14.10.2024 CN 202411435150
(71) Applicant: Wonderland Switzerland AG, 6312 Steinhausen (CH)
(72) Inventor: FENG, Junjing, Qingxi Town, Dongguan, Guangdong, 523648 (CN); HU, Wenqu, Qingxi Town, Dongguan, Guangdong, 523648 (CN)
(74) Representative: Pfenning, Meinig & Partner mbB

(57) **Abstract**

The present disclosure provides a buckle (1), including a male buckle (20, 30) having an engaged portion (250, 350); a female buckle (10) including a housing (110), a cover (120), and a locking member (50), the housing (110) and the cover (120) enclosing an accommodation space, the locking member (50) being movably disposed in the accommodation space, the locking member (50) having an engaging portion (510), the engaging portion (510) having a locked position in which it is locked with the engaged portion (250, 350) and an unlocked position in which it is unlocked from the engaged portion (250, 350); and an operation member (40), which is movably disposed on the female buckle (10) to selectively actuate the engaging portion (510) to be unlocked from the engaged portion (250, 350). The cover (120) or the locking member (50) is provided with an elastic member (122) which applies a force to the engaging portion (510) in a direction towards the locked position. The present disclosure provides a buckle (1) with simple structure, light weight, and low assembly cost.

## Description

### TECHNICAL FIELD

The present disclosure relates to the field of child safety products, and more particularly to magnetic buckles.

### BACKGROUND

A child carrier typically includes a child safety seat, a stroller, an infant basket, etc. The child carrier may secure a child within the child safety seat by using a five-point harness. The five-point harness includes two shoulder straps, two waist straps, and one crotch strap. In order to facilitate wearing and releasing the five-point harness, it is necessary to provide buckles for operably connecting and separating the two shoulder straps, the two waist straps, and the one crotch strap. In this way, a child or an infant can be more safely secured in a child carri er.

However, it is necessary for the buckles in the existing technology to have a plurality of springs to achieve resetting of components, which can increase the number of parts and the weight of the buckles, and raise the cost of assembling the buckles. Therefore, there is a need to design a buckle that is simple in structure, light in weight, and has a low assembling cost.

### SUMMARY

An objective of the present disclosure is to provide a buckle with simple structure, light weight and low assembly cost.

In order to achieve the above objective, in one aspect, the present disclosure provides a buckle, including a male buckle having an engaged portion; a female buckle including a housing, a cover, and a locking member, wherein an accommodation space is enclosed by the housing and the cover, the locking member is movably disposed in the accommodation space, the locking member has an engaging portion, and the engaging portion has a locked position in which it is locked with the engaged portion and an unlocked position in which it is unlocked from the engaged portion; an operation member movably disposed on the female buckle to selectively actuate the engaging portion to be unlocked from the engaged portion, wherein the cover or the locking member is provided with an elastic member, and the elastic member applies a force to the engaging portion in a direction towards the locked position.

In one embodiment, the elastic member is a bendable elastic contact strip.

In one embodiment, the cover is provided with two of the elastic members, and the two elastic members are spaced apart in a second direction.

In one embodiment, the male buckle is provided with a first magnet, and the female buckle is provided with a second magnet. The first magnet and the second magnet are attracted to each other when the operation member is not actuated; and the first magnet and the second magnet are repelled from each other when the operation member is actuated.

In one embodiment, the male buckle has a first magnet accommodating portion, the first magnet is disposed within the first magnet accommodating portion, the female buckle has a second magnet accommodating portion, the second magnet is disposed within the second magnet accommodating portion, and the second magnet accommodating portion is rotatably disposed in the accommodation space.

In one embodiment, the male buckle has two engaged portions, and the first magnet accommodating portion is located between the two engaged portions.

In one embodiment, the male buckle has a magnet cover, and the magnet cover encloses the first magnet within the first magnet accommodating portion.

In one embodiment, the operation member includes: an operating end, wherein at least a part of the operating end is exposed out of the housing; and an arm portion extending from the operating end, the arm portion having a first pushing inclined surface at an end away from the operating end, the locking member has a first pushed inclined surface, the first pushing inclined surface being cooperated with the first pushed inclined surface to unlock the engaging portion of the locking member from the engaged portion.

In one embodiment, the arm portion further has a rack, the second magnet accommodating portion has a gear, the rack is cooperated with the gear to drive the second magnet to rotate when the operation member is actuated.

In one embodiment, the operation member includes two arm portions, the two arm portions extend parallel with each other and one of the two arm portions is provided with the rack on a side facing the other of the two arm portions.

In one embodiment, the second magnet accommodating portion has a rotating shaft, the ends of which are rotatably fixed to the housing and the cover, respectively.

In one embodiment, the locking member has an avoidance portion on a side away from the cover, the second magnet accommodating portion is disposed within the avoidance portion, and a through hole is formed within the avoidance portion, through which the rotating shaft passes.

In one embodiment, the male buckle includes a first male buckle and a second male buckle, and the first male buckle and the second male buckle are disposed on two sides opposite to each other of the female buckle.

In one embodiment, each of the first male buckle and the second male buckle includes two engaged portions, and the locking member includes four engaging portions, the four engaging portions are respectively cooperated with the engaged portions of the first male buckle and the second male buckle.

In one embodiment, the first male buckle and the second male buckle are disposed on two sides of the female buckle along the first direction, the operation member moves along the second direction to actuate the locking member to move along a third direction, and the first direction, the second direction, and the third direction intersect with each other.

In one embodiment, the female buckle has a crotch strap fixing hole, and the male buckle has a shoulder strap fixing hole and a waist strap fixing hole.

In one embodiment, the buckle further includes a webbing buckle, at least a part of which is inserted into the waist strap fixing hole.

In one embodiment, the webbing buckle has a through hole and an abutting portion, and the male buckle has a limiting arm, the abutting portion is blocked by the limiting arm such that the webbing buckle is not capable of being separated from the male buckle.

In one embodiment, the male buckle has an elastic arm, and the elastic arm abuts against the webbing buckle.

In one embodiment, the male buckle has a shoulder strap fixing portion, the shoulder strap fixing portion, together with other parts of the male buckle, forms the shoulder strap fixing hole, and one end of the shoulder strap fixing portion is formed as a free end, such that the shoulder strap fixing hole is in communication with an external space.

In one embodiment, the operation member has a second pushing inclined surface, the second pushing inclined surface is cooperated with a second pushed inclined surface on the locking member such that the locking member moves along a third direction to be unlocked when the operation member moves in the second direction, and the second direction and the third direction intersect with each other.

In one embodiment, the elastic member is disposed between the cover and the locking member; the locking member includes an abutting limiting portion, one end of the elastic member is formed on the cover, and the other end of the elastic member abuts against the abutting limiting portion; or, one end of the elastic member is formed on the locking member, and the other end of the elastic member abuts against the cover.

The present disclosure provides a buckle, including at least one male buckle having an engaged portion; a female buckle adapted to be mated with the male buckle, the female buckle having a locking member adapted to be locked with the engaged portion; an operation member movably disposed on the female buckle and drivingly cooperated with the locking member to unlock the locking member from the engaged portion; at least one first magnet disposed within the at least one male buckle; and a second magnet disposed within the female buckle; wherein during a process that the at least one male buckle and the female buckle approach to each other to be mated or move away from each other to be separated, the second magnet maintains being attracted to the at least one first magnet.

In one embodiment, when the locking member is locked with the engaged portion, the at least one male buckle is restricted from being separated from the female buckle; and when the locking member is unlocked from the engaged portion, the at least one male buckle is allowed to be separated from the female buckle.

In one embodiment, the locking member has an engaging portion, the locking member is movably disposed within the female buckle and having a first position and a second position; when the locking member is in the first position, the engaging portion is located on a moving path of the engaged portion and is locked with the engaged portion; when the locking member is in the second position, the engaging portion is offset from the moving path of the engaged portion and is unlocked from the engaged portion.

In one embodiment, the engaging portion has a pushing inclined surface, during a process that the male buckle and the female buckle approach to each other to be mated, the actuated surface is capable of being pushed by the engaged portion to drive the locking member to move from the first position to the second position.

In one embodiment, the engaging portion is provided with a driving inclined surface; the engaged portion is provided with a mating inclined surface, the mating inclined surface is parallel with the driving inclined surface, and the driving inclined surface is inclined towards a main body portion, the engaging portion pushes the engaged portion to be elastically deformed through cooperation of the driving inclined surface and the mating inclined surface.

In one embodiment, the locking member further has a main body portion, the engaging portion extends outwardly from the main body portion, the second magnet is mounted on the main body portion; or the locking member further has a main body portion, when the engaging portion is locked with the engaged portion, the engaged portion is located between the engaging portion and the main body portion, and an avoidance gap is provided between the engaged portion and the main body portion and/or the engaging portion.

In one embodiment, the locking member is provided with a pushed inclined surface, the operation member is provided with an abutting pushing portion, and the abutting pushing portion is adapted to drive and cooperate with the pushed inclined surface to drive the locking member to be unlocked from the engaged portion.

In one embodiment, the locking member is provided with at least two pushed inclined surfaces; the operation member is provided with at least two abutting pushing portions, the at least two abutting pushing portions is spaced apart along a moving direction of the operation member, the at least two abutting pushing portions correspond to and are capable of abutting against the at least two pushed inclined surfaces, respectively.

In one embodiment, the operation member includes: an operating end protruding out of the female buckle; and an arm portion connected to the operating end, the arm portion being provided with the at least two abutting pushing portions spaced apart along its length direction, the length direction of the arm portion being the same as the moving direction of the operation member.

In one embodiment, the arm portion has an avoidance notch, the avoidance notch divides the arm portion into a first pushing arm and a second pushing arm spaced apart along a first direction, at least one of the first pushing arm and the second pushing arm is provided with the at least two abutting pushing portions.

In one embodiment, the female buckle has at least one receptacle disposed towards a mating direction of the male buckle and the female buckle; the engaged portion of the at least one male buckle is capable of being inserted into the female buckle through the at least one receptacle to be locked with the locking member, or the engaged portion of the at least one male buckle is capable of being disengaged from the female buckle through the at least one receptacle.

In one embodiment, the buckle includes two male buckles, each of which is provided with a first magnet, the two male buckles are disposed opposite to each other in a circumferential direction of the female buckle.

The buckle of the present disclosure has at least following beneficial technical effects:
1. The resetting of the locking member can be achieved by means of the elastic member integrally formed on the female buckle, thereby reducing the number of parts and the weight of the buckle.
2. The elastic member of the present disclosure is integrally formed with the cover of the female buckle, thereby simplifying the assembly process, and the elastic member would not fail due to being assembled in the wrong position.
3. The female buckle of the present disclosure is formed with elastic members at different positions, thereby enabling the stable application of force to the locking member.

### BRIEF DESCRIPTION OF THE DRAWINGS

Various objectives, features, and advantages of the present disclosure will become more apparent by considering detailed description of the preferred embodiments of the present disclosure in conjunction with the accompanying drawings. The drawings are merely illustrative and are not necessarily drawn to scale. In the drawings, the same reference numerals always indicate the same or similar components.
FIG. 1 is a perspective view of a buckle of the present disclosure;
FIG. 2 is a sectional view taken along line A-A of FIG. 1;
FIG. 3 is a perspective view of the buckle of the present disclosure from another viewing angle;
FIG. 4 is an exploded perspective view of the buckle of the present disclosure;
FIG. 5 is an exploded perspective view of the buckle of the present disclosure from another viewing angle;
FIG. 6 is a perspective view of the buckle of the present disclosure, with a housing removed to show an internal structure of a female buckle;
FIG. 7 is a perspective view of the buckle of the present disclosure from another viewing angle, with the housing removed to show the internal structure of the female buckle;
FIG. 8 is a sectional view taken along line B-B of FIG. 1;
FIG. 9 is a perspective view of the internal structure of the female buckle;
FIG. 10 is a perspective view of a buckle in an embodiment of the present disclosure, where a magnetic buckle is in an engaged state;
FIG. 11 is a perspective view of the buckle in an embodiment of the present disclosure, where the magnetic buckle is in a disengaged state;
FIG. 12 is an exploded view of the buckle shown in FIG. 11;
FIG. 13 is an exploded view of the buckle shown in FIG. 11 from another viewing angle;
FIG. 14 is a sectional view taken along line U1-U1 of FIG. 10;
FIG. 15 is a sectional view taken along line U2-U2 of FIG. 10;
FIG. 16 is a perspective view of the buckle shown in FIG. 10, with a top cover of the housing omitted;
FIG. 17 is a perspective view of the buckle shown in FIG. 10 from another viewing angle, with the top cover of the housing omitted;
FIG. 18 is a side view of the buckle shown in FIG. 17, with one male buckle omitted and an operation member in a locked position;
FIG. 19 is a side view of the buckle shown in FIG. 17, with one male buckle omitted and an operation member between a locked position and an unlocked position;
FIG. 20 is a side view of the buckle shown in FIG. 17, with one male buckle omitted and the operation member in the unlocked position;
FIG. 21 is a sectional view of the buckle, with the locking member in a first position;
FIG. 22 is a sectional view of the buckle, with the locking member in a second position;
FIG. 23 is a sectional view of the buckle, with the male buckle being separated from the female buckle.

Reference numbers are listed as follows:
1 buckle
   10 female buckle
   110 housing
      111 crotch strap fixing hole
      112 cover receiving hole
   120 cover
      121 engaging protrusion
      122 elastic member
      123 snap arm
20 first male buckle
   210 shoulder strap fixing hole
   220 shoulder strap fixing portion
   230 waist strap fixing hole
   240 webbing buckle
      241 through hole
      242 abutting portion
   250 engaged portion
      251 actuation surface
   260 first magnet accommodating portion
   270 magnet cover
   280 limiting arm
   290 elastic arm
30 second male buckle
   310 shoulder strap fixing hole
   320 shoulder strap fixing portion
   330 waist strap fixing hole
   340 webbing buckle
      341 through hole
      342 abutting portion
   350 engaged portion
      351 actuation surface
   360 first magnet accommodating portion
   370 magnet cover
   380 limiting arm
   390 elastic arm
40 operation member
   410 operating end
   420 arm portion
      421 hook portion
      422 rack
      423 first pushing inclined surface
   430 resetting member
   440 second pushing inclined surface
50 locking member
   510 engaging portion
      511 actuated surface
   520 through hole
   530 avoidance portion
   540 first pushed inclined surface
   550 abutting limiting portion
   560 second pushed inclined surface
60 second magnet accommodating portion
   610 rotating shaft
   620 gear
70 first magnet
80 second magnet
X, Y, Z direction
1000S buckle
100S male buckle
101S first connecting hole
110S engaged portion
111S mating inclined surface
120S first magnet accommodating portion
130S magnet cover
200S female buckle
201S second connecting hole
210S housing
211S top cover
2111S receptacle
212S cover
2121S positioning portion
213S inner chamber
220S locking member
221S engaging portion
2211S driving inclined surface
2212S actuated surface
222S main body portion
2221S through hole
2222S pushed inclined surface
2222AS first pushed inclined surface
2222BS second pushed inclined surface
231S rotating shaft
232S second magnet accommodating portion
241S activity gap
242S avoidance gap
251S first elastic member
252S second elastic member
300S operation member
310S operating end
320S arm portion
321S abutting pushing portion
321AS first abutting pushing portion
321BS second abutting pushing portion
3211S inclined surface
322S avoidance notch
323S first pushing arm
324S second pushing arm
400S first magnet
500S second magnet
F1 first direction
F2 second direction
F3 third direction

### DETAILED DESCRIPTION

In order to more clearly explain the overall concept of the present disclosure, the following detailed explanation will be provided with reference to the accompanying drawings in the form of examples.

It should be noted that many specific details are described below to facilitate a thorough understanding of the present disclosure. However, the present disclosure may also be implemented in other ways different from those described here. Therefore, the protection scope of the present disclosure is not limited to the specific embodiments disclosed below.

Additionally, in the description of the present disclosure, it should be understood that terms such as "center", "upper", "lower", "front", "rear", "left", "right", "vertical", "horizontal", "top", "bottom", "inner", "outer", "axial", "radial", "circumferential" etc., which indicate directions or positional relationships, are based on the directions or positional relationships shown in the accompanying drawings. These terms are used merely to facilitate the description of the present disclosure and to simplify the description, and are not intended to indicate or imply that the device or component referred to must have a specific orientation, be constructed and operated in a specific orientation, and thus should not be construed as limiting the present disclosure.

In the present disclosure, unless otherwise expressly provided and defined, terms such as "install", "interconnect", "connect", "fix" etc., should be broadly understood. For example, they may refer to fixed connections, detachable connections, or integral formations; direct connections or indirect connections through intermediate mediums; or internal communications or interaction relationships between two components. However, if a direct connection is specified, it means that the two subjects are connected directly without any intermediate structure, forming a whole through the connection structure. For those skilled in the art, the specific meanings of the above terms in the present disclosure may be understood according to specific situations.

Unless otherwise expressly provided and defined in the present disclosure, a first feature being "above" or "under" a second feature may mean that the first and second features are in direct contact, or that the first and second features are in indirect contact through an intermediate medium. In the description of this specification, the terms "an embodiment", "some embodiments", "example", "specific example", or "some examples", etc., mean that specific features, structures, materials, or characteristics described in conjunction with such embodiments or examples are included in at least one embodiment or example of the present disclosure. In this specification, illustrative expressions of the above terms do not necessarily refer to the same embodiment or example. Moreover, the described specific features, structures, materials, or characteristics may be combined in any suitable manner with any one or more embodiments or examples.

A buckle 1 of the present disclosure may be used in child carriers, such as child safety seats, child safety baskets, strollers, and so on. The buckle 1 of the present disclosure may be used to fasten or unfasten a five-point harness, but the present disclosure is not limited thereto. A child carrier may have one or more buckles 1.

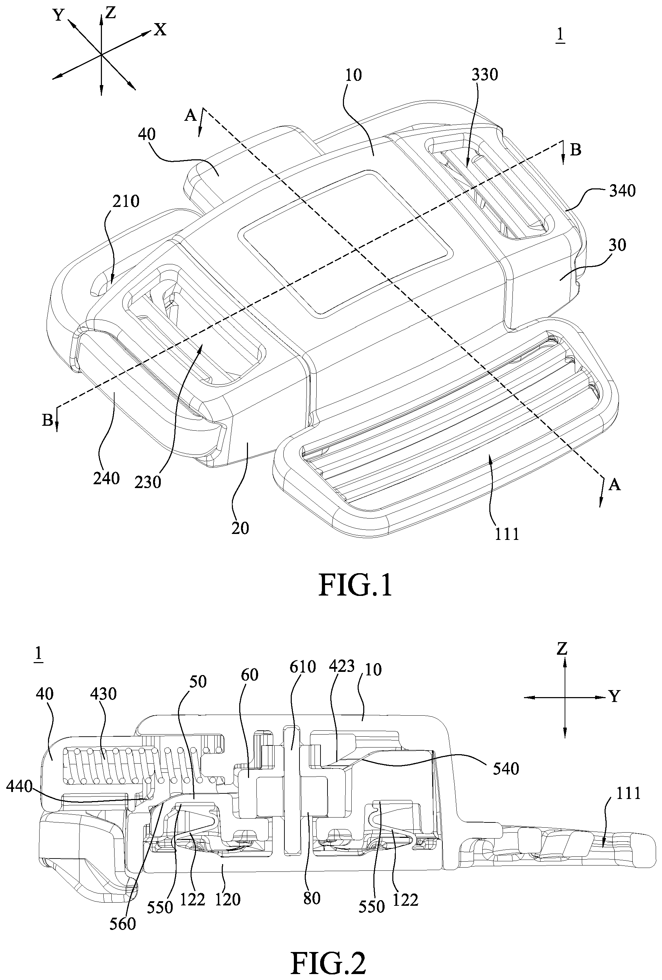

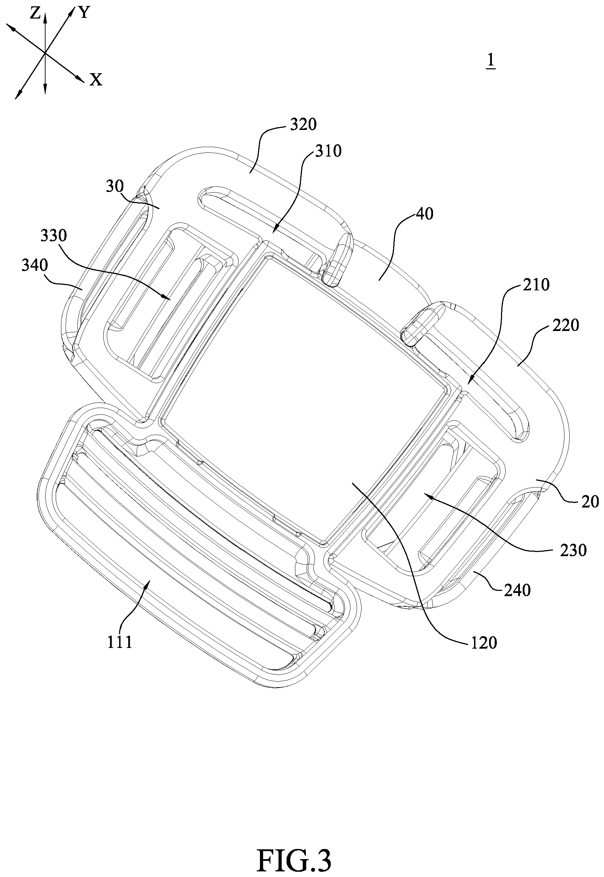

Referring to FIG. 1 and FIG. 3, the buckle 1 may have an axially symmetrical shape. The buckle 1 may include a female buckle 10, a first male buckle 20, and a second male buckle 30. The first male buckle 20 and the second male buckle 30 are respectively disposed on opposite sides of the female buckle 10. Specifically, the first male buckle 20 and the second male buckle 30 may be respectively disposed on the two sides of the female buckle 10 along a first direction X. The female buckle 10 may be plugged and locked with the first male buckle 20 and the second male buckle 30 or may be unlocked with and move away from the first male buckle 20 and the second male buckle 30. The locking of the first male buckle 20 and the second male buckle 30 with the female buckle 20 may be interlinked with each other, that is, the buckle 1 may be configured such that the first male buckle 20 and the second male buckle 30 are locked or unlocked with the female buckle 10 simultaneously. In other embodiments, the locking of the first male buckle 20 and the second male buckle 30 with the female buckle 20 may be independent of each other, that is, when the first male buckle 20 is locked with the female buckle 10, the second male buckle 30 may be locked or unlocked with the female buckle 10, and vice versa. The first male buckle 20 and the second male buckle 30 may have shapes that are mirror-symmetrical to each other. The buckle 1 may have an anti-misinsertion structure, such that the first male buckle 20 may be connected only to a side of the female buckle 10 and the second male buckle 30 may be connected only to an opposite side of the female buckle 10.

In other embodiments, the buckle 1 may have only one male buckle or more than two male buckles.

In other embodiments, the first male buckle 20 and the second male buckle 30 may be disposed on the same side of the female buckle 10, or may be disposed on two non-opposite sides of the female buckle 10.

The buckle 1 may also include an operation member 40. The operation member 40 may be movably disposed on the female buckle 10. The operation member 40 may be exposed from a side of the female buckle 10 along a second direction Y. The first direction X intersects with the second direction Y. Preferably, the first direction X may be perpendicular to the second direction Y.

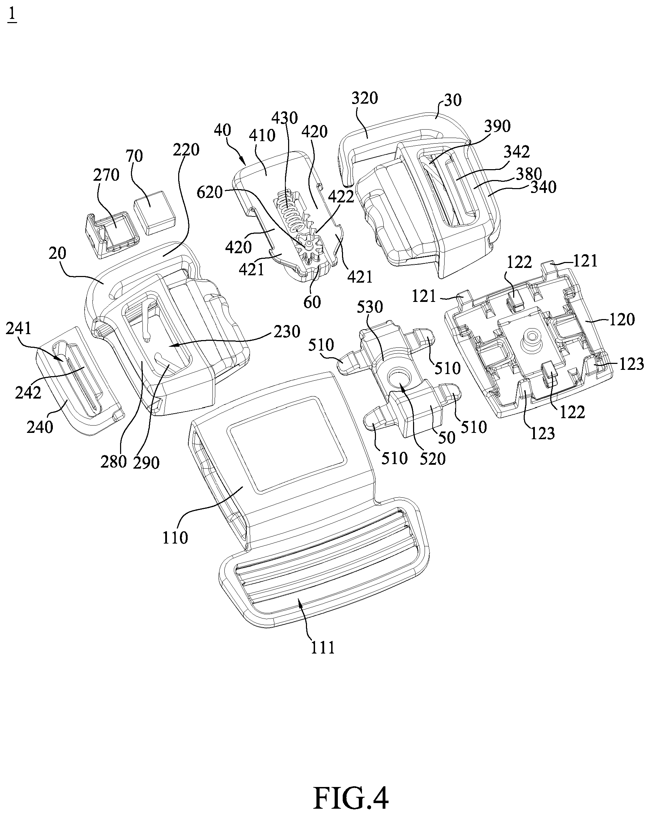

Referring to FIG. 1 and FIG. 4, the female buckle 10 may include a housing 110. The housing 110 is open at both sides thereof along the first direction X. One side of the housing 110 may have a crotch strap fixing hole 111. Specifically, the housing 110 may have the crotch strap fixing hole 111 on a side away from the operation member 40 along the second direction Y, but the present disclosure is not limited thereto. The crotch strap fixing hole 111 may include three through holes, through which a crotch strap (not shown) may pass sequentially, thereby connecting the crotch strap to the housing 110.

In other embodiments, the crotch strap fixing hole 111 may include one through hole, two through holes, four through holes, or more than four through holes.

Continuing to refer to FIG. 1 and FIG. 4, the first male buckle 20 may have a shoulder strap fixing hole 210 and a waist strap fixing hole 230. The second male buckle 30 may have a shoulder strap fixing hole 310 and a waist strap fixing hole 330. The shoulder strap fixing holes 210, 310 may be respectively formed on one side of the first male buckle 20 and the second male buckle 30 along the second direction Y. Specifically, when the first male buckle 20 and the second male buckle 30 are locked with the female buckle 10, the shoulder strap fixing holes 210, 310 may be respectively formed on one side of the first male buckle 20 and the second male buckle 30 away from the crotch strap fixing hole 111 along the second direction Y. The waist strap fixing holes 230, 330 may be respectively formed on one side of the first male buckle 20 and the second male buckle 30 away from each other along the first direction X, that is, the waist strap fixing holes 230, 330 may be respectively formed on an outer side of the buckle 1. The first male buckle 20 may have a shoulder strap fixing portion 220. The second male buckle 30 may have a shoulder strap fixing portion 320. The shoulder strap fixing portions 220, 320 extend and bend from the first male buckle 20 and the second male buckle 30, respectively, to form (enclose) the shoulder strap fixing holes 210, 310 together with other parts of the first male buckle 20 and the second male buckle 30. An end of each of the shoulder strap fixing portions 220, 320 may be formed as a free end, such that the shoulder strap fixing holes 210, 310 are communicated with an external space. In other words, each of the shoulder strap fixing portions 220, 320 has only one end connected to other parts of the first male buckle 20 or the second male buckle 30, and the other end of each of the shoulder strap fixing portions 220, 320 form a gap with other parts of the first male buckle 20 or the second male buckle 30, such that the shoulder strap may enter into and exit out of the shoulder strap fixing holes 210, 310.

Continuing to refer to FIG. 1 and FIG. 4, the buckle 1 may include webbing buckles 240, 340. The webbing buckles 240, 340 may be respectively inserted at least partially into the waist strap fixing holes 230, 330. Hereinafter, an example of the webbing buckle 240 and the first male buckle 20 will be described, and it can be understood that the webbing buckle 340 and the second male buckle 30 have the same mating manner.

The webbing buckle 240 may have a through hole 241 and an abutting portion 242. The through hole 241 may be formed in the middle of the webbing buckle 240 and may be elongated. The abutting portion 242 may be adjacent to a side of the through hole 241. The abutting portion 242 may be formed as a wedge that is tapered away from the through hole 241. The first male buckle 20 may have a limiting arm 280. Specifically, the first male buckle 20 may have two limiting arms 280. A gap is formed between the two limiting arms 280, through which the webbing buckle 240 passes through. The gap between the two limiting arms 280 may be slightly smaller than the overall thickness of the webbing buckle 240 and slightly larger than a thickness of the webbing buckle 240 except for the abutting portion 242. Thus, when the webbing buckle 240 passes through the gap into the waist strap fixing hole 230, the wedge-shaped abutting portion 242 spreads the two limiting arms 280 on both sides thereof, and the two limiting arms 280 are elastically deformed. After the abutting portion 242 enters into the waist strap fixing hole 230, the two limiting arms 280 return to their original shape. At this time, the abutting portion 242 may be blocked by the limiting arm 280, to prevent the webbing buckle 240 from leaving the waist strap fixing hole 230 through the gap between the two limiting arms 280.

The first male buckle 20 may have an elastic arm 290. In this embodiment, the first male buckle 20 may have two elastic arms 290, but the present disclosure is not limited thereto. The two elastic arms 290 may extend in the waist strap fixing hole 230 and abut against the webbing buckle 240. The two elastic arms 290 may provide a resilient force to the webbing buckle 240 such that the webbing buckle 240 may be retracted from the waist strap fixing hole 230, and the abutting portion 242 of the webbing buckle 240 may be kept abutting against the limiting arm 280, thereby preventing the webbing buckle 240 from shaking. The waist strap (not shown) may pass through the through hole 241 and the waist strap fixing hole 230. The through hole 241 and the waist strap fixing hole 230 may be staggered to provide a clamping force on the waist strap by clamping the waist strap between the limiting arm 280 and the webbing buckle 240.

In some embodiments, the waist strap may pass through a part of the through hole 241 and the waist strap fixing hole 230 being overlapped, go around the limiting arm 280, and then pass through the part where the through hole 241 and the waist strap fixing hole 230 are staggered. The abutting portion 242 and the limiting arm 280 together limit the sliding of the waist strap by clamping it between the abutting portion 242 and the limiting arm 280. When adjustment is needed, the waist strap may be released by pressing the webbing buckle 240 to compress the elastic arm 290.

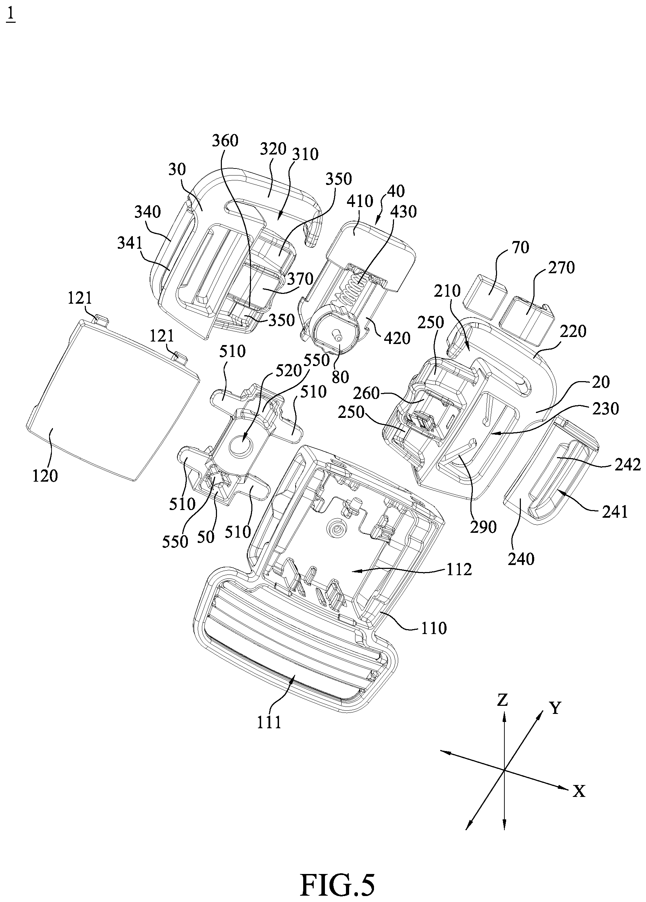

Referring to FIG. 5, the first male buckle 20 may have an engaged portion 250 and a first magnet accommodating portion 260. The first magnet accommodating portion 260 may be used to accommodate the first magnet 70. The first magnet 70 may have a shape of a cuboid or cube, but the present disclosure is not limited thereto. The first male buckle 20 may have a magnet cover 270. The magnet cover 270 may enclose the first magnet 70 within the first magnet accommodating portion 260. The magnet cover 270 may be formed in a shape similar to a letter "L" but the present disclosure is not limited thereto. In this embodiment, the first male buckle 20 may have two engaged portions 250, but the present disclosure is not limited thereto. The two engaged portions 250 may be located on both sides of the first magnet accommodating portion 260. Specifically, the two engaged portions 250 and the first magnet accommodating portion 260 may extend towards the female buckle 10 along the first direction X, and the two engaged portions 250 may be located on both sides of the first magnet accommodating portion 260 along the second direction Y.

A webbing buckle 340 of the second male buckle 30 may have a through hole 341 and an abutting portion 342. The second male buckle 30 may have an engaged portion 350, a first magnet accommodating portion 360, a magnet cover 370, a limiting arm 380, and an elastic arm 390. The through hole 341, the abutting portion 342, the engaged portion 350, the first magnet accommodating portion 360, the magnet cover 370, the limiting arm 380, and the elastic arm 390 may be the same as the through hole 241, the abutting portion 242, the engaged portion 250, the first magnet accommodating portion 260, the magnet cover 270, the limiting arm 280, and the elastic arm 290, respectively, and thus will not be described again.

Referring to FIG. 3 to FIG. 5, the female buckle 10 may include a cover 120 fixed on the housing 110. The cover 120 may be integrally formed with an elastic member 122. The cover 120 may also be formed with an engaging protrusion 121 and a snap arm 123. A side of the housing 110 may be formed with a cover receiving hole 112. The cover 120 may be snap-fit with the housing 110 by the engaging protrusion 121 and the snap arm 123 to cover the cover receiving hole 112, but the present disclosure is not limited thereto. The housing 110 and the cover 120 may enclose an accommodating space. In this embodiment, the cover 120 may have two engaging protrusions 121 on one side thereof and two snap arms 123 on the other side thereof, but the present disclosure is not limited thereto. In an embodiment, the cover 120 may be made of plastic. In another embodiment, the cover 120 may be made of metal.

The cover 120 may be formed with two elastic members 122. The elastic member 122 may be formed as a bent elastic touch strip. The elastic member 122 may be bent in an "S" shape. The two elastic members 122 may be located on locations of the cover 120 close to both sides thereof along the second direction Y.

In other embodiments, the cover 120 may be formed with one, three, four, or more than four elastic members 122.

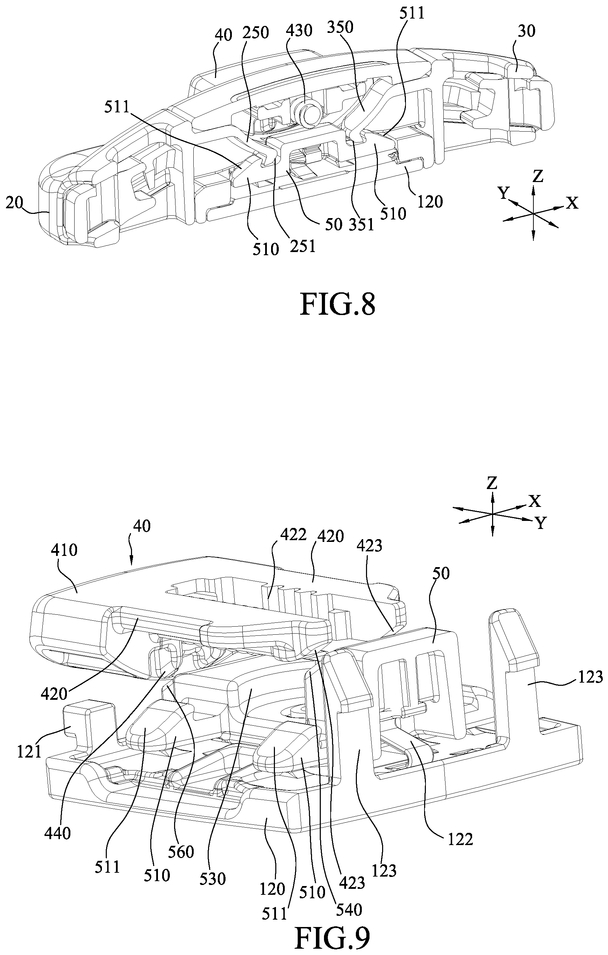

Referring to FIG. 4 and FIG. 5, the operation member 40 may include: an operating end 410, at least a part of which is exposed outside the housing 110; and an arm portion 420, extending from the operating end 410. The operating end 410 may be shaped to facilitate being pressed by the operator's finger. The arm portion 420 may include a hook portion 421 and a first pushing inclined surface 423 (see FIG. 9). The first pushing inclined surface 423 may be located at an end of the arm portion 420 away from the operating end 410. The hook portion 421 may be adjacent to the first pushing inclined surface 423. The hook portion 421 may abut against the housing 110 to prevent the operation member 40 from disengaging from the female buckle 10. In this embodiment, the operation member 40 may include two arm portions 420, but the present disclosure is not limited thereto. The two arm portions 420 may extend parallel with each other. The hook portions 421 may be respectively formed on outer sides of the two arm portions 420 away from each other. The first pushing inclined surfaces 423 may be respectively formed on sides of the two arm portions 420 close to the locking member 50 (which will be described in detail later) along the third direction Z. One of the two arm portions 420 includes a rack 422. The rack 422 may be formed on a side of one of the two arm portions 420 facing the other one of the two arm portions 420. A resetting member 430 may provide resetting force for the operation member 40, so that the operation member 40 may return to an initial position after being pressed. The two ends of the resetting member 430 may respectively abut against the operation member 40 and the housing 110. The resetting member 430 may be a helical spring. Alternatively, the resetting member 430 may be formed as an elastic touch strip integrally with the operation member 40.

Continuing to refer to FIG. 4 and FIG. 5, the female buckle 10 includes a locking member 50 that may be movably disposed in the above-mentioned accommodating space. The locking member 50 may have an engaging portion 510. In this embodiment, the locking member 50 may have four engaging portions 510, but the present disclosure is not limited thereto. The four engaging portions 510 may extend symmetrically to both sides thereof. The elastic member 122 of the cover 120 may abut against the locking member 50. The locking member 50 may be provided with an abutting limiting portion 550 (see FIG. 2 and FIG. 5), and the elastic member 122 may be formed on or abut against the abutting limiting portion 550. A side of the locking member 50 away from the cover 120 may be formed with an avoidance portion 530. The avoidance portion 530 may be substantially centrally formed on the locking member 50. The locking member 50 may have a through hole 520. The through hole 520 may be formed within the avoidance portion 530. Either side of the avoidance portion 530 along the second direction Y may be provided with two engaging portions 510. The two engaging portions 510 on each side of the avoidance portion 530 along the second direction Y may extend along a direction opposite to the first direction X.

In other embodiments, the elastic member 122 may also be formed on the locking member 50, for example, formed on a lower surface of the locking member 50, and abut against the cover 120.

In other embodiments, the locking member 50 may have one, two, six, or other numbers of engaging portions 510.

Referring to FIG. 2, the elastic member 122 may abut against a lower side of the locking member 50 along a third direction Z. The third direction Z may intersect with the first direction X and the second direction Y, respectively. Preferably, the third direction Z may be perpendicular to the first direction X and the second direction Y, respectively. The engaging portion 510 may have a locked position where it is locked with the engaged portion 250, 350 and an unlocked position where it is unlocked with the engaged portion 250, 350. The elastic member 122 may apply a force to the engaging portion 510 towards the locked position (i.e., an upward direction in FIG. 2). The locking member 50 may have a first pushed inclined surface 540. The first pushing inclined surface 423 of the operation member 40 may cooperate with the first pushed inclined surface 540 to unlock the engaging portion 510 of the locking member 50 from the engaged portion 250, 350. That is to say, the operation member 40 may be pressed to selectively actuate the engaging portion 510 to be unlocked from the engaged portion 250, 350 (which will be described in detail later). The first pushed inclined surface 540 may be formed on a side of the locking member 50 away from the operating end 410.

Referring to FIG. 8, the engaged portions 250, 350 may be formed as hook-shaped members extending inward, and the engaging portions 510 may be formed as hook-shaped members extending outward along the first direction X. The engaged portions 250, 350 may respectively have actuation surfaces 251, 351. The engaging portions 510 may be formed with actuated surfaces 511. When the female buckle 10 is engaged with the first male buckle 20 and the second male buckle 30, the engaged portions 250, 350 are respectively locked with the engaging portions 510, to prevent the first male buckle 20 and the second male buckle 30 from extending outward along the first direction X to be disengaged from the female buckle 10.

Continuing to refer to FIG. 4 and FIG. 5, the female buckle 10 includes a second magnet accommodating portion 60. A second magnet 80 may be disposed within the second magnet accommodating portion 60. The second magnet accommodating portion 60 may be rotatably disposed in the accommodating space of the female buckle 10. The second magnet accommodating portion 60 may be located within the avoidance portion 530 and include a rotating shaft 610 and a gear 620. The avoidance portion 530 may be slightly larger than an outer contour of the second magnet accommodating portion 60, so that the second magnet accommodating portion 60 may not be blocked by the locking member 50 while being rotated.

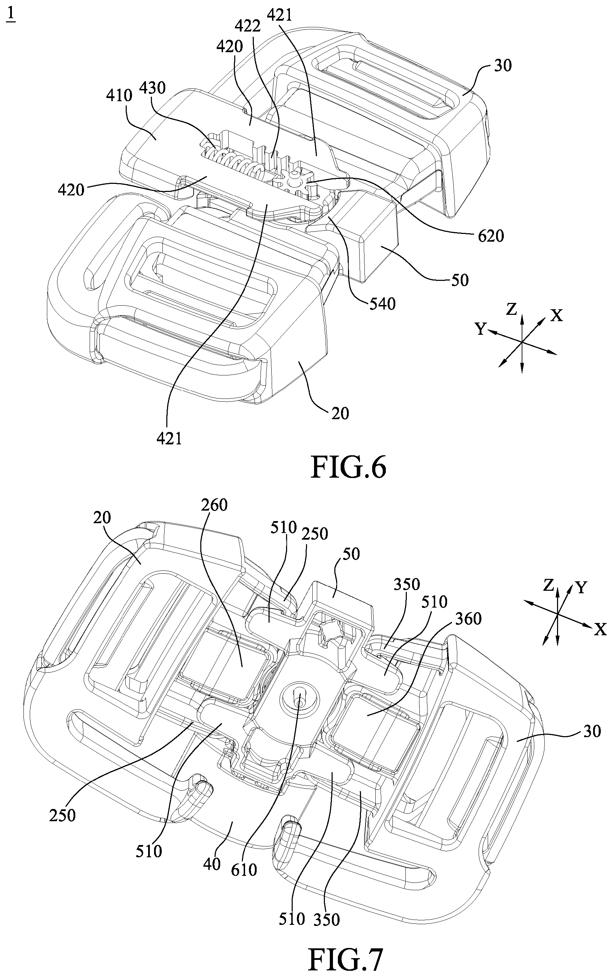

Referring to FIG. 6, the rack 422 on the arm portion 420 of the operation member 40 may be cooperated (engaged) with the gear 620 to drive the rotation of the second magnet accommodating portion 60 when the operation member 40 is actuated. The rack 422 and the gear 620 may be configured such that the second magnet accommodating portion 60 is rotated to switch polarity of the second magnet 80 when the operation member 40 is pressed.

Referring to FIG. 2 and FIG. 7, the rotating shaft 610 may be centrally disposed on the second magnet accommodating portion 60 and may pass through the second magnet 80. When the first male buckle 20 and the second male buckle 30 are engaged with the female buckle 10, the two first magnet accommodating portions 260, 360 may respectively approach or abut against the second magnet accommodating portion 60 from both sides along the first direction X, such that the first magnet 70 and the second magnet 80 are adjacent to each other.

Referring to FIG. 2, an upper end of the rotating shaft 610 may be rotatably fixed to the housing 110, while a lower end of the rotating shaft 610 may be rotatably fixed to the cover 120. The rotating shaft 610 may pass through the through hole 520.

An operation process of the buckle 1 will now be described.

Referring to FIG. 7 and FIG. 8, when the first male buckle 20 and the second male buckle 30 are engaged (locked) with the female buckle 10, the first male buckle 20 and the second male buckle 30 are brought from both sides along the first direction X close to the female buckle 10. The first magnet accommodating portions 260, 360 and the engaged portions 250, 350 are inserted into the housing 110. The first magnet accommodating portions 260, 360 gradually approach the second magnet accommodating portion 60. The sides of the two first magnets 70 approach to the second magnet 80 may be formed to be opposite magnetic poles, such that the second magnet 80 may attract the two first magnets 70 on both sides. Under the magnetic force of the first magnets 70 and the second magnet 80, the actuation surfaces 251, 351 of the engaged portions 250, 350 respectively cooperate with the actuated surfaces 511 of the engaging portions 510, such that the locking member 50 may overcome an elastic force of the elastic member 122 to move downward (along the third direction Z). In this way, the locking member 50 allows the first male buckle 20 and the second male buckle 30 to move further towards the female buckle 10 until the hook-shaped members of the engaged portions 250, 350 pass over the hook-shaped members of the engaging portions 510. After the hook-shaped members of the engaged portions 250, 350 pass over the hook-shaped members of the engaging portions 510, the elastic member 122 pushes the locking member 50 upward to the initial position, such that the hook-shaped members of the engaged portions 250, 350 may be interlocked with the hook-shaped members of the engaging portions 510. In this way, the first male buckle 20 and the second male buckle 30 are engaged with the female buckle 10.

It can be understood that an engagement process may be spontaneously completed by magnetic attractive force between the first magnets 70 and the second magnet 80 when the first male buckle 20 and the second male buckle 30 approach the female buckle 10, or may be completed jointly by the magnetic attractive force between the first magnets 70 and the second magnet 80 and a force applied by an operator on the first male buckle 20 and the second male buckle 30.

Referring to FIG. 2, FIG. 6, and FIG. 9, when the first male buckle 20 and the second male buckle 30 are unlocked from the female buckle 10, the operation member 40 may be pushed along the second direction Y. As shown in FIG. 2, the operation member 40 is actuated along the second direction Y, such that the first pushing inclined surface 423 pushes the first pushed inclined surface 540 downward along the third direction Z, so as to allow the locking member 50 to move downward against the elastic force of the elastic member 122. Meanwhile, as shown in FIG. 6, the operation member 40 is actuated along the second direction Y, such that the rack 422 drives the rotation of the gear 620 on the second magnet accommodating portion 60, so as to switch the magnetic poles of the second magnet 80 within the second magnet accommodating portion 60. In this way, the second magnet 80 applies a repulsive force to the two first magnets 70 on both sides thereof. As shown in FIG. 8, since the locking member 50 moves downward, the engaging portion 510 of the locking member 50 does not prevent the engaged portions 250, 350 from leaving the female buckle 10 along the first direction X. In this way, with the repulsive force applied by the second magnet 80 on the two first magnets 70 on both sides thereof, the first male buckle 20 and the second male buckle 30 are pushed to be unlocked from the female buckle 10.

It can be understood that an unlocking process may be spontaneously completed by the magnetic repulsive force between the first magnets 70 and the second magnet 80, or may be completed jointly by the magnetic repulsive force between the first magnets 70 and the second magnet 80 and the force applied by the operator on the first male buckle 20 and the second male buckle 30.

After the unlocking is completed, a pushing force applied to the operation member 40 is canceled, and then the resetting member 430 pushes the operation member 40 back to the initial position that has not been pushed. In this process, the elastic member 122 pushes the locking member 50 upward to the initial position, and the rack 422 drives the rotation of the gear 620 to restore the second magnet 80 to its initial position (the magnetic pole of the second magnet 80 is opposite to that of the first magnet 70).

In this embodiment, the first magnet 70 and the second magnet 80 are attracted to each other when the operation member 40 is not actuated, and the first magnet 70 and the second magnet 80 are repelled from each other when the operation member 40 is actuated. Referring to FIG. 9, the operation member 40 may have a second pushing inclined surface 440. The second pushing inclined surface 440 may be disposed at a point where the operating end 410 is connected with the arm portion 420, and may be formed as an inclined surface facing the locking member 50. Referring to FIG. 2 and FIG. 9, the second pushing inclined surface 440 may be cooperated with a corresponding second pushed inclined surface 560 on the locking member 50. During the movement of the operation member 40 along the second direction Y, the first pushing inclined surface 423 and the second pushing inclined surface 440 may jointly move the locking member 50 smoothly along the third direction Z to be unlocked. The first pushing inclined surface 423 and the second pushing inclined surface 440 are respectively disposed on both sides of the arm portion 420 along the second direction Y, and are disposed corresponding to the position of the elastic member 122, but not limited thereto.

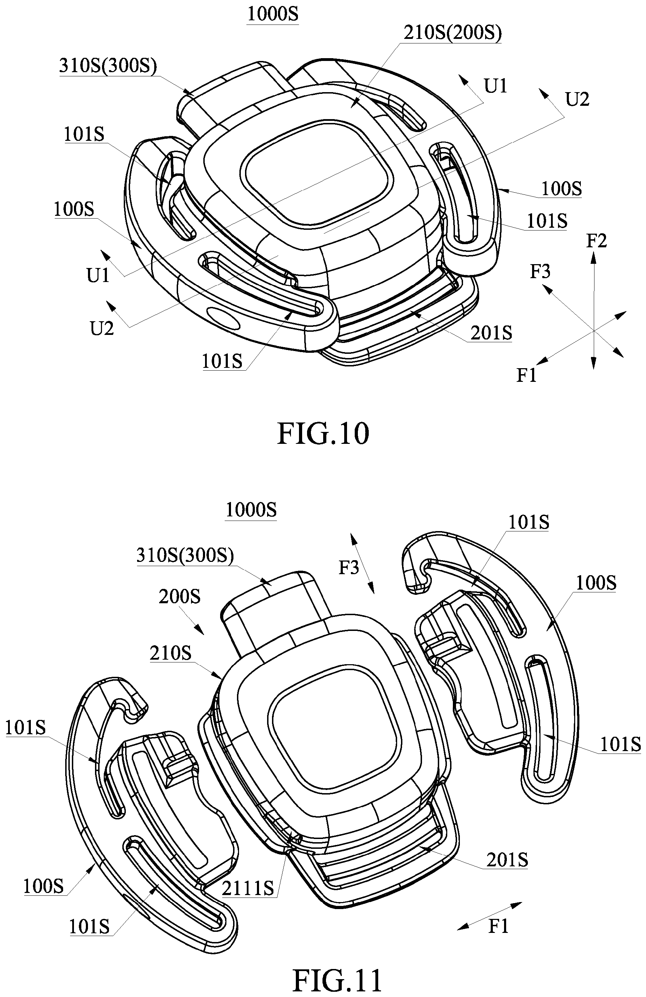

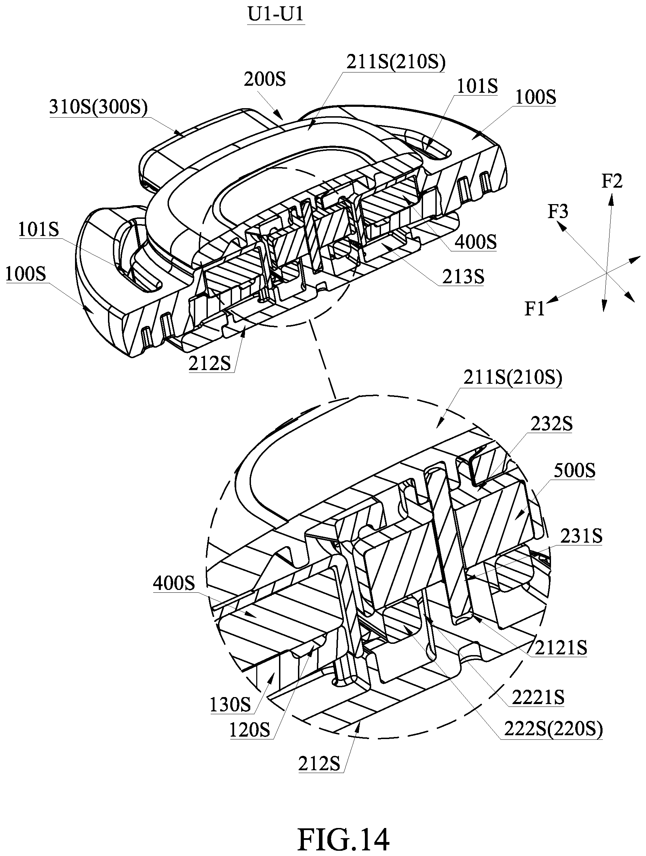

FIG. 10 shows a perspective view of a buckle 1000S according to an embodiment of the present disclosure. Referring to FIG. 11 to FIG. 13, the buckle 1000S includes at least one male buckle 100S, a female buckle 200S, an operation member 300S, at least one first magnet 400S, and a second magnet 500S (see FIG. 14). The at least one male buckle 100S has an engaged portion 110S. The female buckle 200S is adapted to mate with the male buckle 100S in a plug-in manner, such that the buckle 1000S is in an engaged state (see FIG. 10) and a disengaged state (see FIG. 11). The female buckle 200S is provided with a locking member 220S, which is designed to be locked with and cooperated with the engaged portion 110S. This enables the buckle 1000S to be kept in the engaged state that limits the disengagement of the male buckle 100S from the female buckle 200S. The operation member 300S is movably disposed on the female buckle 200S and is drivingly cooperated with the locking member 220S to release the locking between the locking member 220S and the engaged portion 110S. Thus, by operating the operation member 300S, the male buckle 100S may be allowed to be separated from the female buckle 200S, such that the buckle 1000S is in the disengaged state. In this embodiment, at least one first magnet 400S is disposed within the at least one male buckle 100S, and the second magnet 500S is fixedly disposed within the female buckle 200S (see FIG. 14). During the process of at least one male buckle 100S approaching the female buckle 200S to be inserted or moving away from the female buckle 200S to be separated, the second magnet 500S and the at least one first magnet 400S are kept to be absorbed.

It should be noted that when the locking member 220S is locked and cooperated with the engaged portion 110S, the male buckle 100S may be regarded as limiting the separation from the female buckle 200S, and the buckle 1000S is kept in the engaged state. When the locking member 220S is unlocked from the engaged portion 110S, the male buckle 100S may be regarded as allowing the separation from the female buckle 200S, such that the buckle 1000S is switched from the engaged state to the disengaged state.

It should also be noted that the application scenarios of the above-mentioned buckle 1000S include, but are not limited to carriers, such as infant harnesses, strollers, or safety seats (not shown in the figures). Specifically, taking the application of the buckle 1000S in an infant harness as an example, the male buckle 100S may be connected to a shoulder strap (not shown) and/or a waist strap (not shown) of the infant harness, while the female buckle 200S may be connected to a vest (not shown) of the infant harness. In this way, a user can assemble the infant harness by the connection and cooperation between the male buckle 100S and the female buckle 200S, in order to carry the infant conveniently during outdoor activities. At the same time, by disassembling the male buckle 100S from the female buckle 200S, the user can quickly remove the infant harness from his/her body.

Referring to FIG. 10 and FIG. 11, in an embodiment, the male buckle 100S is provided with at least one first connecting hole 101S, for the connection of the male buckle 100S with the shoulder strap and/or the waist strap of the infant harness. The female buckle 200S is provided with at least one second connecting hole 201S, for the connection of the female buckle 200S with the vest. Specifically, the first connecting hole 101S allows a woven strap to pass through, and the woven strap may then be fixedly connected to the shoulder strap and/or the waist strap by sewing; alternatively, the woven strap may be connected to the shoulder strap and/or the waist strap by a detachable connecting structure, such as a pair of snap buttons or a zipper. Similarly, the second connecting hole 201S allows a woven strap to pass through, and the woven strap may be connected to the vest by sewing; alternatively, the woven strap may be connected to the vest by a detachable connecting structure, such as a pair of snap buttons or a zipper. Certainly, in other embodiments, the first connecting hole 101S may directly allow the shoulder strap and/or the waist strap to pass through to connect the male buckle 100S with the shoulder strap and/or the waist strap. The second connecting hole 201S may directly allow a part of the vest to pass through to connect the female buckle 200S with the vest. Specifically, in this embodiment, the male buckle 100S is provided with two first connecting holes 101S, which are used to connect the shoulder strap and the waist strap, respectively. It should be noted that when the above-mentioned buckle 1000S is applied to the stroller or the safety seat, the first connecting hole 101S may also be used to connect the male buckle 100S with the shoulder strap and/or the waist strap in the stroller or the safety seat. The second connecting hole 201S may also be used to connect the female buckle 200S with the crotch strap in the stroller or the safety seat.

In the above-mentioned buckle 1000S, the male buckle 100S may mate with the female buckle 200S in the plug-in manner, such that the buckle 1000S has the engaged state and the disengaged state. Specifically, after the male buckle 100S approaches the female buckle 200S to be inserted therein, the locking member 220S of the female buckle 200S may be locked with the engaged portion 110S of the male buckle 100S to lock the buckle 1000S in the engaged state. When the operation member 300S is operated, the operation member 300S may be drivingly cooperated with the locking member 220S to release the locking between the locking member 220S and the engaged portion 110S, thereby allowing the male buckle 100S to be separated from the female buckle 200S, such that the buckle 1000S is in the disengaged state. In addition, in the above-mentioned buckle 1000S, the male buckle 100S is fixedly mounted with the first magnet 400S, and the female buckle 200S is fixedly mounted with the second magnet 500S. During the process of the male buckle 100S approaching the female buckle 200S to be inserted therein or the male buckle 100S moving away from the female buckle 200S to be disengaged therefrom, the second magnet 500S and the first magnet 400S are kept attracted. This design can ensure that when the buckle 1000S is switched to be in the engaged state, the magnetic attraction of the first magnet 400S and the second magnet 500S can quickly and accurately guide the engagement of the male buckle 100S and the female buckle 200S. Furthermore, due to the continuous attraction between the first magnet 400S and the second magnet 500S, even when the buckle 1000S is switched from the engaged state to the disengaged state, it can prevent a flying phenomenon caused by the rapid separation of the male buckle 100S from the female buckle 200S, thereby reducing a risk of accidental injury to the user or the infant due to phenomenons such as flying the male buckle 100S.

It should be emphasized that the second magnet 500S is fixedly mounted within the female buckle 200S, in other words, it is not movable or rotatable relative to the female buckle 200S. Therefore, during the unlocking process where the operation member 300S is operated to drive the movement of the locking member 220S, the second magnet 500S is kept stationary. In this way, the magnetic pole between the first magnet 400S and the second magnet 500S is kept unchanged. As a result, regardless of whether the first magnet 400S and the second magnet 500S are brought closer together or moved further apart, they are continuously kept in a magnetically attractive state.

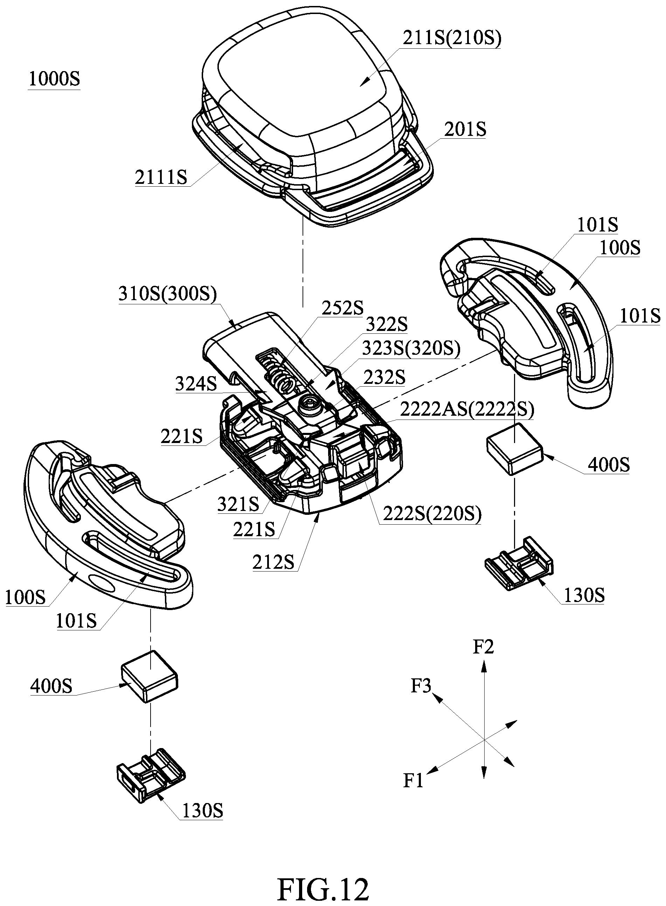

It should be noted that the number of the male buckles 100S and the first magnets 400S of the above-mentioned buckle 1000S may not be specifically defined, and the number of the first magnets 400S of the male buckle 100S may not be specifically defined either. Specifically, in this embodiment, the male buckles 100S may be provided in two, each of the male buckles is provided with one first magnet 400S. As shown in FIG. 12 to FIG. 14, a first magnet accommodating portion 120S is disposed inside the male buckle 100S, and the first magnet 400S is mounted within the first magnet accommodating portion 120S. A chamber port of the first magnet accommodating portion 120S is sealed by a magnet cover 130S to limit the separation of the first magnet 400S from the first magnet accommodating portion 120S. The two male buckles 100S may be arranged at intervals along a circumferential direction of the female buckle 200S. For example, the two male buckles 100S are arranged opposite each other along the circumferential direction of the female buckle 200S. In other words, the two male buckles 100S are symmetrically disposed relative to the female buckle 200S and may be considered as being located on left and right sides of the female buckle 200S.

Referring to FIG. 14, in an embodiment, the second magnet 500S is fixedly mounted in an inner chamber 213S of the female buckle 200S. Specifically, the second magnet 500S is substantially fixed in the middle of the inner chamber 213S of the female buckle 200S. In this way, when the male buckles 100S are inserted into both sides of the female buckle 200S, the magnetic attractive force generated between the second magnet 500S and the first magnets 400S of the male buckle 100S on both sides thereof are substantially the same. This can ensure the smoothness where the two male buckles 100S are plug-in with the female buckle 200S.

Referring to FIG. 12 and FIG. 14, in this embodiment, the second magnet 500S is covered by a second magnet accommodating portion 232S. In other words, a second magnet accommodating portion 232S is disposed in the inner chamber 213S of the female buckle 200S. The second magnet accommodating portion 232S has an empty chamber where the second magnet 500S is placed. This can improve the service life of the second magnet 500S. Certainly, in other embodiments, the second magnet accommodating portion 232S may be omitted.

The structure of the buckle 1000S will now be briefly described by taking the female buckle 200S and one male buckle 100S as an example.

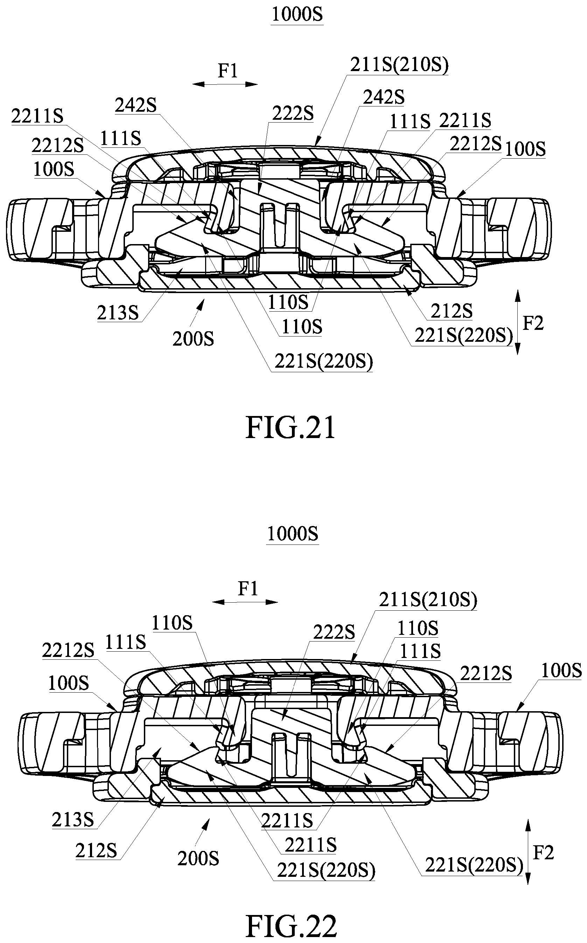

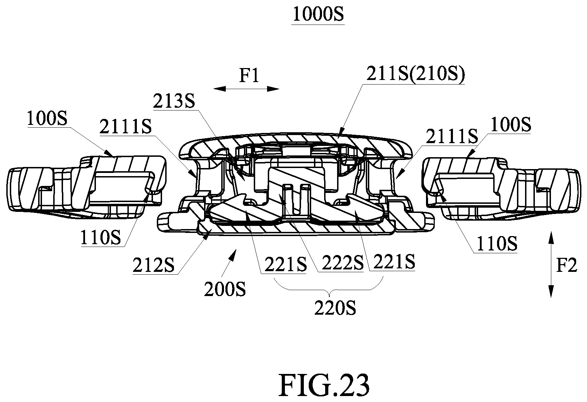

Referring to FIG. 12, FIG. 13, and FIG. 15, in an embodiment, the female buckle 200S also includes a housing 210S. The locking member 220S is movably disposed within the housing 210S and has a first position (see FIG. 21) and a second position (see FIG. 22). The locking member 220S has an engaging portion 221S, which is adapted to be locked with the engaged portion 110S of the male buckle 100S. Specifically, the housing 2105 includes a top cover 211S and a cover 212S. The top cover 211S and the cover 212S are engaged with each other in an up-down direction and form an inner chamber 213S. The locking member 220S moves within the inner chamber 213S to be switchable between the first position and the second position. More specifically, the housing 210S is provided with a receptacle (i.e., hole for insertion) 2111S in communication with the inner chamber 213S. The number of receptacles 2111S corresponds to the number of male buckles 100S. The engaged portion 110S of the male buckle 100S is inserted into the inner chamber 213S through the receptacle 2111S to be locked with the engaging portion 221S of the locking member 220S. When the locking member 220S is in the first position (see FIG. 21), the engaging portion 221S is located on a moving path of the engaged portion 110S, which refers to that the engaging portion 221S is locked with the engaged portion 110S, thus limiting the separation of the male buckle 100S from the female buckle 200S. When the locking member 220S is in the second position (see FIG. 22), the engaging portion 221S deviates from the moving path of the engaged portion 110S, which refers to that the engaging portion 221S is unlocked from the engaged portion 110S, thus allowing the male buckle 100S to be separated from the female buckle 200S (see FIG. 23).

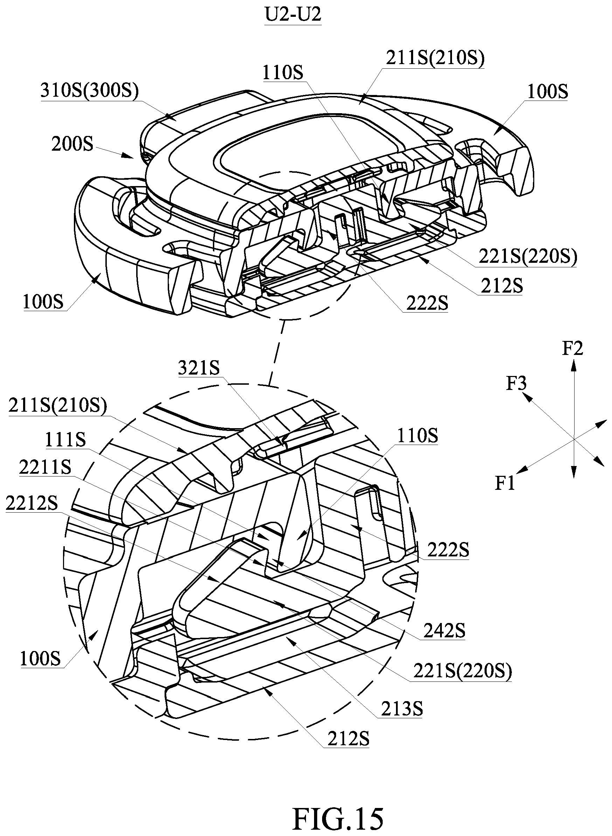

Combining FIG. 11 and FIG. 15, in this embodiment, the receptacle 2111S is provided in a direction where the male buckle 100S is inserted into the female buckle 200S. If the direction where the male buckle 100S is inserted into the female buckle 200S is referred to as a first direction F1, the receptacle 2111S may be considered to be provided towards the first direction F1. A direction where the locking member 220S moves within the housing 210S is referred to as a second direction F2. The second direction F2 intersects with the first direction F1. Specifically, the second direction F2 is substantially perpendicular to the first direction F1. When the buckle 1000S is placed on a horizontal plane, the first direction F1 may be regarded as a left-right direction of the buckle 1000S, and the second direction F2 may be regarded as an up-down direction of the buckle 1000S, that is, the locking member 220S may be roughly regarded as moving up and down in a vertical direction, and the first position is above the second position.

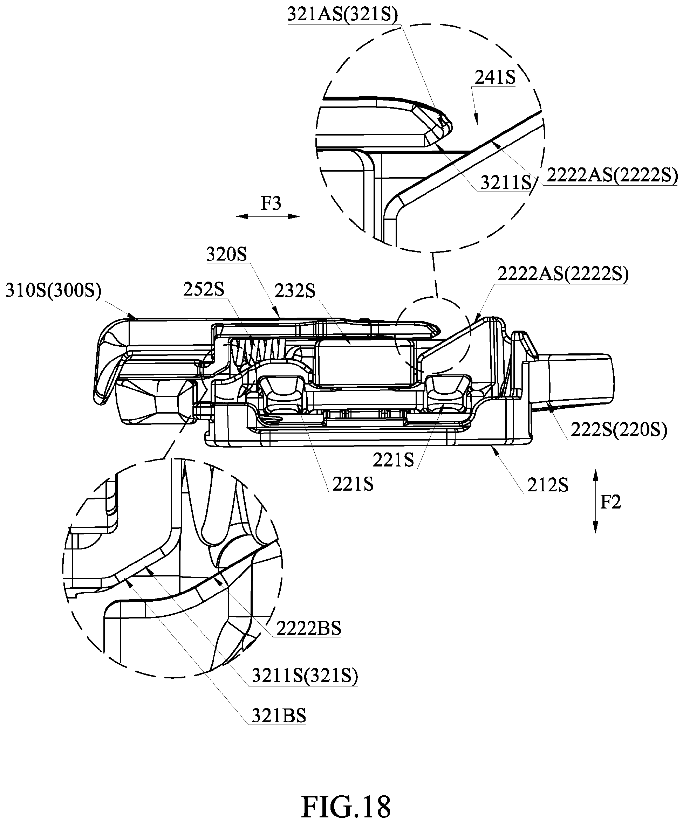

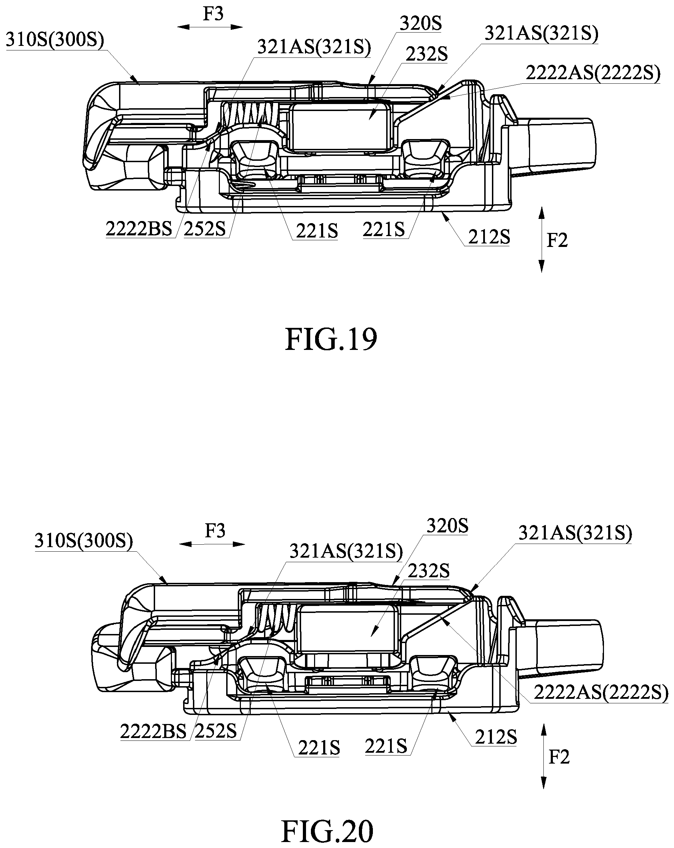

In this embodiment, the user can drive the locking member 220S to move from the first position to the second position by operating the operation member 300S, so that the engaging portion 221S may be unlocked from the engaged portion 110S. Certainly, in other embodiments, the above-mentioned operation member 300S may also be omitted, and the user can directly drive the locking member 220S to move from the first position to the second position. Specifically, as shown in FIG. 12, FIG. 15, and FIG. 17, the operation member 300S is movably disposed within the housing 210S and has a locked position and an unlocked position. When the operation member 300S is operated (such as pressed or pushed) to move from the locked position to the unlocked position (that is, from FIG. 18 to FIG. 19 and then to FIG. 20), the operation member 300S drives the locking member 220S to switch from the first position to the second position (that is, from FIG. 21 to FIG. 22). In this way, when it is necessary to unlock the buckle 1000S, the operation member 300S may be directly operated. In this embodiment, the operation member 300S includes an operating end 310S and an arm portion 320S that are connected to each other. The arm portion 320S is received within the housing 210S and is used to drive the locking member 220S (the specific principle will be described later). The operating end 310S protrudes or extends out of the housing 210S and is used for direct operation (for example, pressing or pushing) by the user.

In this embodiment, as shown in FIG. 12, FIG. 15, and FIG. 17, the direction where the operation member 300S moves relative to the housing 210S is considered as a third direction F3, and the arm portion 320S of the operation member 300S extends along the third direction F3. The third direction F3 intersects with both the first direction F1 and the second direction F2. Specifically, the third direction F3 is substantially perpendicular to both the first direction F1 and the second direction F2. In conjunction with the figures, when the buckle 1000S is placed on the horizontal plane, the third direction F3 may be regarded as a front-back direction of the buckle 1000S. To be more specific, in this embodiment, an X, Y, and Z axis coordinate system is provided in a part of the views, where X, Y, and Z are mutually perpendicular. The X-axis is the left-right direction (i.e., the first direction F1); the Y-axis is the front-back direction (i.e., the third direction F3); and the Z-axis is the up-down direction (i.e., the second direction F2).

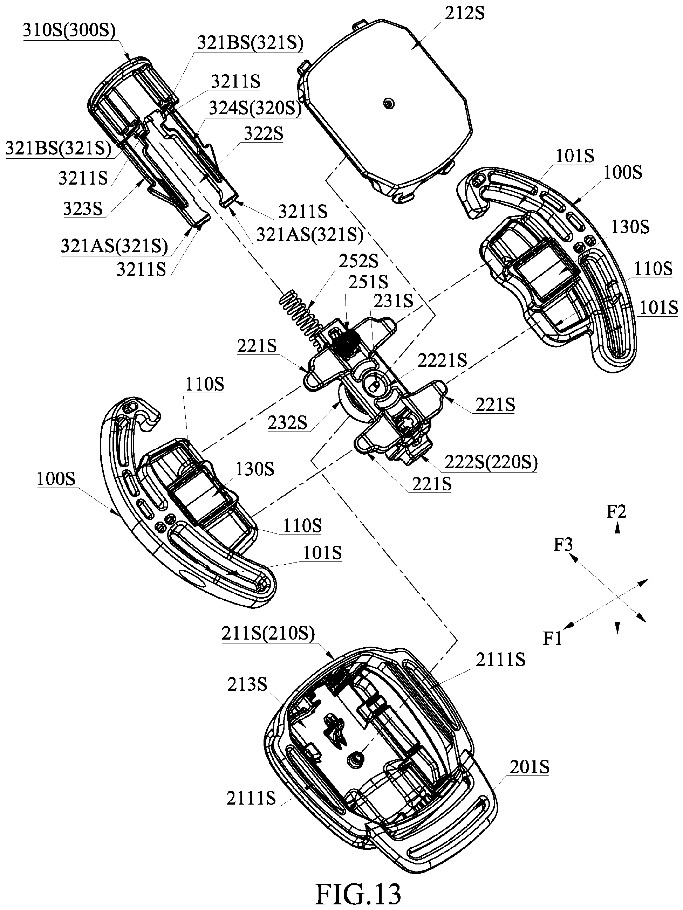

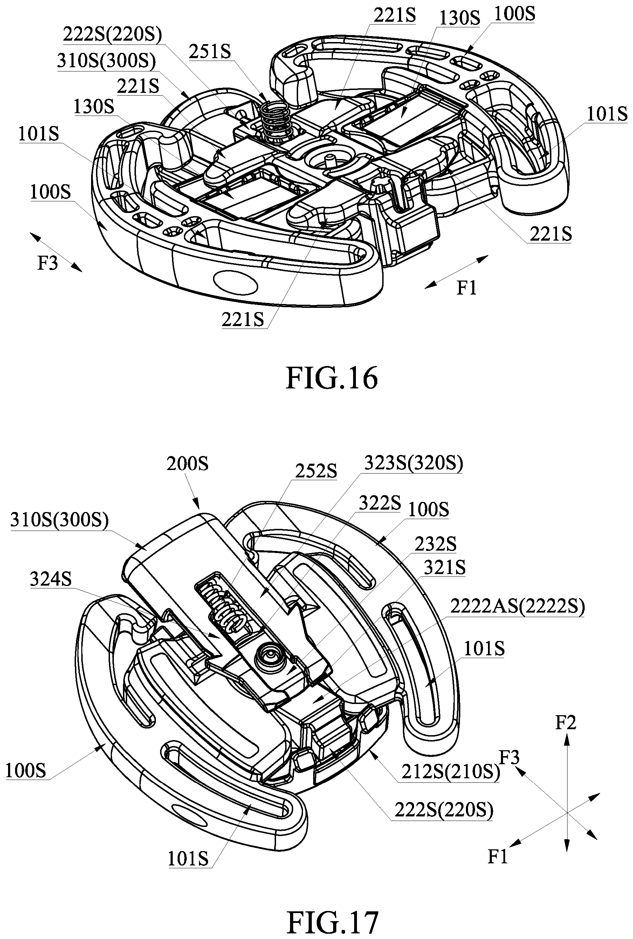

Referring to FIG. 13 and FIG. 16, in an embodiment, the female buckle 200S also includes a first elastic member 251S. The first elastic member 251S is used to provide an elastic restoring force for the locking member 220S to constantly keep the locking member 220S in the first position. The first elastic member 251S may be, but not limited to, a compression spring or a tension spring, or any other elastic structural components. Specifically, in this embodiment, the first elastic member 251S is a compression spring that is abutted between the locking member 220S and the cover 212S. When the user applies pressure to the locking member 220S via the operation member 300S to move the locking member 220S from the first position to the second position, the compression spring is compressed. After the user releases the pressure applied to the locking member 220S, the compression spring returns to its original shape to drive the locking member 220S to automatically move from the second position back to the first position.

In order to drive the locking member 220S to move towards the second direction F2 while the user operates (for example pushes) the operation member 300S to move towards the third direction F3, as shown in FIG. 18 to FIG. 20, in an embodiment, the locking member 220S is provided with a pushed inclined surface 2222S, and the operation member 300S (specifically the arm portion 320S) is provided with an abutting pushing portion 321S. The abutting pushing portion 321S is adapted to drivingly cooperate with the pushed inclined surface 2222S to drive the locking member 220S to be switched from the first position to the second position, in other words, to drive the locking member 220S to contact and cooperate with the engaged portion 110S. Specifically, the pushed inclined surface 2222S is inclined towards the operation member 300S. When the operation member 300S is in the locked position, the abutting pushing portion 321S is spaced apart from the pushed inclined surface 2222S along the third direction F3 (see FIG. 18). During the process where the operation member 300S moves from the locked position to the unlocked position, that is, during the process where the operation member 300S moves forward along the third direction F3, the abutting pushing portion 321S moves forward and gradually abuts against the pushed inclined surface 2222S (switching from FIG. 18 to FIG. 19), and subsequently, the abutting pushing portion 321S may slide along the pushed inclined surface 2222S while continuing to move forward, thereby pushing the locking member 220S to move downward from the first position to the second position along the second direction F2 (see FIG. 20).

In this embodiment, to ensure the reliability and safety of the buckle 1000S in use, as shown in FIG. 18, when the operation member 300S is in the locked position, the abutting pushing portion 321S is spaced apart from the pushed inclined surface 2222S along the third direction F3, which refers to that an activity gap 241S is provided between the abutting pushing portion 321S and the pushed inclined surface 2222S. The presence of this activity gap 241S can ensure that even if the operating end 310S of the operation member 300S is accidentally touched and pressed by an infant, due to its limited strength, it can only cause a slight displacement of the arm portion 320S within the activity gap 241S. This can effectively prevent the accidental unlocking of the locking member 220S due to unintended contact, thereby ensuring the reliability and safety of the infant harness in use. Certainly, in other embodiments, as shown in FIG. 19, the activity gap 241S between the abutting pushing portion 321S and the pushed inclined surface 2222S may be omitted; in other words, when the operation member 300S is in the locked position, the abutting pushing portion 321S may also be in direct contact with the pushed inclined surface 2222S.

Referring to FIG. 18, in order to improve the smoothness of the operation member 300S pushing the locking member 220S to be unlocked, the abutting pushing portion 321S of the operation member 300S has an inclined surface 3211S. When the abutting pushing portion 321S pushes the pushed inclined surface 2222S, the inclined surface 3211S is attached to the pushed inclined surface 2222S, such that the inclined surface 3211S is moved along the third direction F3 to push the locking member 220S to move along the second direction F2.

Referring to FIG. 18, in an embodiment, the locking member 220S is provided with at least two pushed inclined surfaces 2222S, which are spaced apart along the third direction F3. Correspondingly, the operation member 300S has at least two abutting pushing portions 321S, which are also spaced apart along the third direction F3. The at least two abutting pushing portions 321S are disposed corresponding to and abut against the at least two pushed inclined surfaces 2222S. This can enhance the stability of the operation member 300S while pushing the locking member 220S. Specifically, in this embodiment, the locking member 220S is provided with two pushed inclined surfaces 2222S, which are respectively referred to as a first pushed inclined surface 2222AS and a second pushed inclined surface 2222BS, and the second magnet 500S is located between the first pushed inclined surface 2222AS and the second pushed inclined surface 2222BS. The operation member 300S is provided with two abutting pushing portions 321S, which are respectively referred to as a first abutting pushing portion 321AS and a second abutting pushing portion 321BS, and the second abutting pushing portion 321BS is closer to the operating end 310S than the first abutting pushing portion 321AS. The first abutting pushing portion 321AS corresponds to the first pushed inclined surface 2222AS, and the second abutting pushing portion 321BS corresponds to the second pushed inclined surface 2222BS. The locking member 220S may smoothly move from the first position to the second position along the second direction F2 to be unlocked in a manner that the two abutting pushing portions 321S push against the two pushed inclined surfaces 2222S.

Referring to FIG. 12 and FIG. 13, in an embodiment, the arm portion 320S is formed with an avoidance notch 322S that divides the arm portion 320S into a first pushing arm 323S and a second pushing arm 324S. The avoidance notch 322S is provided towards the third direction F3, such that the first pushing arm 323S and the second pushing arm 324S are kept to be spaced apart along the first direction F1. At least one of the first pushing arm 323S and the second pushing arm 324S is provided with the first abutting pushing portion 321AS and second abutting pushing portion 321BS. Specifically, in this embodiment, the first pushing arm 323S is provided with the first abutting pushing portion 321AS and the second abutting pushing portion 321BS, and the second pushing arm 324S is also provided with the first abutting pushing portion 321AS and the second abutting pushing portion 321BS (see FIG. 12 and FIG. 13). This can enhance the reliability of the locking member 220S that moves from the first position to the second position to be unlocked.

In this embodiment, as shown in FIG. 12 and FIG. 17, the female buckle 200S also includes a second elastic member 252S. The second elastic member 252S is used to provide an elastic restoring force for the operation member 300S to keep the operation member 300S in the locked position. The second elastic member 252S may also be, but not limited to, an elastic structural component, such as a compression spring or a tension spring. Specifically, in this embodiment, the second elastic member 252S is also a compression spring that may be abutted between the operation member 300S and a side wall of the housing 210S, or may be abutted between the operation member 300S and the second magnet accommodating portion 232S. When the user applies pressure (such as a pushing force) to the operation member 300S such that the operation member 300S moves from the locked position to the unlocked position, the compression spring is compressed. After the user releases the pressure applied to the operation member 300S, the compression spring returns to its original shape, to drive the operation member 300S to automatically reset, that is, to move automatically from the unlocked position back to the locked position.

Referring to FIG. 13, FIG. 14, and FIG. 16, in an embodiment, the locking member 220S also has a main body portion 222S. The engaging portion 221S mentioned above may be considered as extending outward from the main body portion 222S. Specifically, the engaging portion 221S is formed by protruding relative to the main body portion 222S along the first direction F1. The second magnet accommodating portion 232S covers the second magnet 500S and both the second magnet accommodating portion 232S and the second magnet 500S are located above the main body portion 222S along the second direction F2. Specifically, in this embodiment, a positioning portion 2121S is provided on a side of the cover 212S facing the top cover 211S and on a side of the top cover 211S facing the cover 212S. A through hole 2221S is provided in the middle of the main body portion 222S. The rotating shaft 231S has one end inserted into the positioning portion 2121S on the cover 212S, and the other end passing through the through hole 2221S, the second magnet 500S, and the second magnet accommodating portion 232S to be inserted into the positioning portion 2121S on the top cover 211S. In this embodiment, projections of the two positioning portions 2121S on the top cover 211S or the cover 212S are within a projection of the avoidance notch 322S on the top cover 211S or the cover 212S. This can allow the avoidance notch 322S to avoid the rotating shaft 231S, to prevent interference between the operation member 300S and the rotating shaft 231S during movement. Moreover, the stacked arrangement of the second magnet 500S and the locking member 220S can enhance the compactness of the internal structure of the female buckle 200S.

Referring to FIG. 15 and FIG. 21 to FIG. 23, in this embodiment, both the engaging portion 221S and the engaged portion 110S are hook-shaped structures. A hook of the engaging portion 221S is provided with a driving inclined surface 2211S, and a hook of the engaged portion 110S is provided with a mating inclined surface 111S. The mating inclined surface 111S is inclined in the same direction as and parallel with the driving inclined surface 2211S, for example, the driving inclined surface 2211S is inclined towards the main body portion 222S (as shown in FIG. 21). It should be noted that in this embodiment, both the engaging portion 221S and the engaged portion 110S may be considered to have an elastic structure. Thus, the engaging portion 221S may push the engaged portion 110S to be elastically deformed by the cooperation of the driving inclined surface 2211S and the mating inclined surface 111S, to allow the locking member 220S to move from the first position to the second position. During this movement, the engaging portion 221S moves downward along the second direction F2, and at the same time, the driving inclined surface 2211S pushes against the mating inclined surface 111S, such that the engaged portion 110S may elastically deform towards the main body portion 222S along the first direction F1. Although the movement of the locking member 220S from the first position to the second position along the second direction F2 is blocked by the driving inclined surface 2211S, the elastic deformation can overcome the interference of the engaged portion 110S with the engaging portion 221S.

As shown in FIG. 15 and FIG. 21, when the engaged portion 110S of the male buckle 100S passes through the receptacle 2111S and is locked with the engaging portion 221S of the locking member 220S, the buckle 1000S is considered to be in the engaged state. The engaged portion 110S of the male buckle 100S is located outside the main body portion 222S, that is, the engaged portion 110S is located between the engaging portion 221S and the main body portion 222S. The first magnet 400S and the second magnet 500S are magnetically attracted to each other. As shown in FIG. 22 and FIG. 23, after the engaging portion 221S is retracted from the moving path of the engaged portion 110S to be unlocked from the engaged portion 110S, the engaged portion 110S of the male buckle 100S may be retracted from the receptacle 2111S to separate the male buckle 100S from the female buckle 200S, such that the buckle 1000S is in the disengaged state.

In some other embodiments, the engaging portion 221S and the engaged portion 110S may not be provided with an elastic structure. An avoidance gap 242S is provided between the engaged portion 110S of the male buckle 100S and the main body portion 222S and/or the engaging portion 221S. Specifically, when the carrier is in use, the shoulder strap and/or the waist strap are usually under tension to pull the male buckle 100S to have a trend of being separated from the female buckle 200S. At this time, the engaged portion 110S and the engaging portion 221S are engaged by means of the hooks to be locked. The male buckle 100S is limited from retracting from the female buckle 200S. The mating inclined surface 111S of the engaged portion 110S abuts against the driving inclined surface 2211S of the engaging portion 221S, and an avoidance gap 242S is formed between the engaged portion 110S of the male buckle 100S and the main body portion 222S (see FIG. 21). When unlocking, an avoidance gap 242S is formed between the engaged portion 110S of the male buckle 100S and the main body portion 222S. Therefore, during the movement of the engaging portion 221S from the first position to the second position along the second direction F2, the driving inclined surface 2211S pushes against the mating inclined surface 111S, such that the mating inclined surface 111S drives the engaged portion 110S to move towards a direction close to the main body portion 222S in the first direction F1. In other words, the movement of the driving member 220S can allow the male buckle 100S to move within the avoidance gap 242S, which provides a necessary movement space for the male buckle 100S. This can ensure that the locking member 220S can move unobstructedly from the first position to the second position along the second direction F2; in other words, the avoidance gap 242S can prevent the engaging portion 221S from being limited from moving from the first position to the second position along the second direction F2. Certainly, in other embodiments, if the magnetic attractive force between the first magnet 400S and the second magnet 500S is strong enough to attach the male buckle 100S tightly to the main body portion 222S, an avoidance gap 242S is formed between the engaged portion 110S and the engaging portion 221S (see FIG. 15).

It should be noted that in other embodiments, at least one of the driving inclined surface 2211S and the mating inclined surface 111S may not be inclined, that is, at least one of the driving inclined surface 2211S and the mating inclined surface 111S may be a vertical surface extending substantially along the second direction F2. This can prevent interference between the engaging portion 221S and the engaged portion 110S when the locking member 220S is switched from the first position to the second position, and the present disclosure is not limited thereto.

Referring to FIG. 15, in an embodiment, the hook of the engaging portion 221S may also be provided with an actuated surface 2212S. During the process of switching the buckle 1000S from the engaged state to the disengaged state, that is, when the male buckle 100S is inserted into the female buckle 200S along the first direction F1, the actuated surface 2212S may be pushed by the engaged portion 110S to drive the locking member 220S to move from the first position to the second position. When the engaged portion 110S passes over the hook of the engaging portion 221S, the locking member 220S automatically returns to the first position under the restoring force of the first elastic member 251S (switching from FIG. 22 to FIG. 21). Specifically, the actuated surface 2212S is opposite to and intersects with the driving inclined surface 2211S, and the actuated surface 2212S and the driving inclined surface 2211S together form the hook of the engaging portion 221S.

Hereinafter, the working principle of the buckle 1000S will be briefly described by taking the female buckle 200S and one of the male buckles 100S as an example.

Referring to FIG. 21, when the buckle 1000S is in the engaged state, as the locking member 220S is in the first position, the engaging portion 221S of the locking member 220S is located on the moving path of the engaged portion 110S of the male buckle 100S, the engaging portion 221S of the locking member 220S and the engaged portion 110S are locked and cooperated with each other, to limit the separation of the male buckle 100S from the female buckle 200S.

Referring to FIG. 18 to FIG. 23, when it is necessary to switch the buckle 1000S from the engaged state to the disengaged state, the user directly presses or pushes the operation member 300S, to move the operation member 300S gradually from the locked position to the unlocked position. During the movement of the operation member 300S, the abutting pushing portion 321S thereon pushes against the pushed inclined surface 2222S of the locking member 220S, such that the locking member 220S may gradually move from the first position to the second position. As the locking member 220S is switched from the first position to the second position, the engaging portion 221S gradually deviates from the moving path of the engaged portion 110S. As shown in FIG. 14 and FIG. 22, when the locking member 220S moves to the second position, the engaging portion 221S is retracted from the moving path of the engaged portion 110S. Since the first magnet 400S and the second magnet 500S are always kept magnetically attracted to each other, even after the engaging portion 221S is retracted from the moving path of the engaged portion 110S, the male buckle 100S may still be inserted into the female buckle 200S without any external force or with a small external force. When the user applies a pulling force to the male buckle 100S, and the pulling force is greater than the magnetic attractive force between the first magnet 400S and the second magnet 500S, the male buckle 100S may smoothly be retracted from the female buckle 200S through the receptacle 2111S under the action of the pulling force. After the male buckle 100S and the female buckle 200S are separated, under the restoring force of the first elastic member 251S, the locking member 220S automatically returns to the first position from the second position while the operation member 300S automatically moves from the unlocked position to the locked position under the restoring force of the second elastic member 252S.

Certainly, when the user needs to switch the buckle 1000S from the disengaged state to the engaged state, the engaged portion 110S of the male buckle 100S may be directly inserted into the inner chamber 213S of the housing 210S through the receptacle 2111S. During the insertion process, the engaged portion 110S gradually comes into contact with the actuated surface 2212S and pushes against the actuated surface 2212S, such that the locking member 220S moves from the first position to the second position. When the engaged portion 110S passes over the end of the actuated surface 2212S (i.e., a hook tip of the engaging portion 221S), the engaging portion 221S may return to the first position under the action of the first elastic member 251S (switching from FIG. 22 to FIG. 21), and further the engaging portion 221S is located again on the moving path where the engaged portion 110S is retracted from the female buckle 200S, and thereby limiting the separation of the male buckle 100S from the female buckle 200S. It should be noted that during the mating process of the male buckle 100S with the female buckle 200S, since the magnetism of the first magnet 400S and the second magnet 500S is not changed and the first magnet 400S and the second magnet 500S keep attracting each other, the mating process is more labor-saving.

Referring to FIG. 15 and FIG. 21, in this embodiment, the male buckle 100S is provided in two. The two male buckles 100S are symmetrically disposed on both sides of the female buckle 200S when the buckle 1000S is in the engaged state. Specifically, engaging portions 221S are provided on either of the left and right sides of the main body portion 222S. The engaging portion 221S on the left side of the main body portion 222S is used to be locked with the engaged portion 110S of one of the male buckles 100S, while the engaging portion 221S on the right side of the main body portion 222S is used to be locked with the engaged portion 110S of the other one of the male buckles 100S.

Referring to FIG. 13, in an embodiment, the locking member 220S may have a plurality of engaging portions 221S as described above. Specifically, a plurality of (such as two, three, or more) engaging portions 221S are provided on both the left and the right sides of the main body portion 222S. Specifically, in this embodiment, two engaging portions 221S are provided on each of the left and right sides of the main body portion 222S. Correspondingly, two engaged portions 110S are respectively provided on each of the left and right sides of the male buckle 100S. The two engaged portions 110S are located on both sides of the first magnet 400S and may be considered as being spaced apart along the third direction F3. In this way, after the male buckle 100S is engaged with the female buckle 200S, the two engaging portions 221S may be locked with the two engaged portions 110S simultaneously, thereby increasing the reliability of the engaging connection between the male buckle 100S and the female buckle 200S. As described above, the avoidance notch 322S divides the arm portion 320S to form a first pushing arm 323S and a second pushing arm 324S, which are spaced apart along the first direction F1 (i.e., the left-right direction). Each of the first pushing arm 323S and the second pushing arm 324S is provided with first abutting pushing portion 321AS and second abutting pushing portion 321BS spaced apart along the third direction F3. Therefore, during the process where the arm portion 320S pushes the main body portion 222S downward along the second direction F2 through the first pushing arm 323S and the second pushing arm 324S located on left and right sides thereof, the engaging portions 221S on the left and right sides of the main body portion 222S may move substantially simultaneously, to be unlocked with the engaged portions 110S of the male buckle 100S on the same side simultaneously and smoothly.

## Claims

1. A buckle (1), comprising
a male buckle (20, 30) having an engaged portion (250, 350);
a female buckle (10) comprising a housing (110), a cover (120), and a locking member (50), wherein an accommodation space is enclosed by the housing (110) and the cover (120), the locking member (50) is movably disposed in the accommodation space, the locking member (50) has an engaging portion (510), and the engaging portion (510) has a locked position in which it is locked with the engaged portion (250, 350) and an unlocked position in which it is unlocked from the engaged portion (250, 350);
an operation member (40) movably disposed on the female buckle (10) to selectively actuate the engaging portion (510) to be unlocked from the engaged portion (250, 350),
wherein the cover (120) or the locking member (50) is provided with an elastic member (122), and the elastic member (122) applies a force to the engaging portion (510) in a direction towards the locked position.

2. The buckle (1) according to claim 1, wherein the elastic member (122) is a bendable elastic contact strip, and/or
wherein the cover (120) is provided with two of the elastic members (122), and the two elastic members (122) are spaced apart in a second direction (Y).

3. The buckle (1) according to any one of claims 1 or 2, wherein the male buckle (20, 30) is provided with a first magnet (70), and the female buckle (10) is provided with a second magnet (80), the first magnet (70) and the second magnet (80) are attracted to each other when the operation member (40) is not actuated; and the first magnet (70) and the second magnet (80) are repelled from each other when the operation member (40) is actuated, and/or
wherein the male buckle (20, 30) has a first magnet accommodating portion (260, 360), the first magnet (70) is disposed within the first magnet accommodating portion (260, 360), the female buckle (10) has a second magnet accommodating portion (60), the second magnet (80) is disposed within the second magnet accommodating portion (60), and the second magnet accommodating portion (60) is rotatably disposed in the accommodation space, and/or
wherein the operation member (40) comprises:
an operating end (410), wherein at least a part of the operating end (410) is exposed out of the housing (110); and
an arm portion (420) extending from the operating end (410), the arm portion (420) having a first pushing inclined surface (423) at an end away from the operating end (410),
the locking member (50) has a first pushed inclined surface (540), the first pushing inclined surface (423) being cooperated with the first pushed inclined surface (540) to unlock the engaging portion (510) of the locking member (50) from the engaged portion (250, 350).

4. The buckle (1) according to claim 3, wherein the arm portion (420) further has a rack (422), the second magnet accommodating portion (60) has a gear (620), the rack (422) is cooperated with the gear (620) to drive the second magnet (80) to rotate when the operation member (40) is actuated.

5. The buckle (1) according to any one of claims 3 or 4, wherein the operation member (40) comprises two of the arm portions (420), wherein the two arm portions (420) extend parallel with each other and one of the two arm portions (420) is provided with the rack (422) on a side facing the other of the two arm portions (420).

6. The buckle (1) according to any one of claims 3 to 5, wherein the operation member (40) has a second pushing inclined surface (440), the second pushing inclined surface (440) is cooperated with a second pushed inclined surface (560) on the locking member (50) such that the locking member (50) moves along a third direction (Z) to be unlocked when the operation member (40) moves in the second direction (Y), and the second direction (Y) and the third direction (Z) being are intersected with each other.

7. The buckle (1) according to any one of claims 1 to 6, wherein the elastic member (122) is disposed between the cover (120) and the locking member (50);
the locking member (50) comprises an abutting limiting portion (550), one end of the elastic member (122) is formed on the cover (120), and the other end of the elastic member (122) abuts against the abutting limiting portion (550); or, one end of the elastic member (122) is formed on the locking member (50), and the other end of the elastic member (122) abuts against the cover (120).

8. A buckle (1000S), comprising
at least one male buckle (100S) provided with an engaged portion (1105);
a female buckle (200S) adapted to be mated with the male buckle (100S), the female buckle (200S) being provided a locking member (220S) adapted to be locked with the engaged portion (110S);
an operation member (300S) movably disposed on the female buckle (200S) and drivingly cooperated with the locking member (220S) to unlock the locking member (220S) from the engaged portion (110S);
at least one first magnet (400S) disposed within the at least one male buckle (100S); and
a second magnet (500S) disposed within the female buckle (200S);
wherein in case that the at least one male buckle (100S) and the female buckle (200S) approach to each other to be mated or move away from each other to be separated, the second magnet (500S) maintains being attracted to the at least one first magnet (400S).

9. The buckle (1000S) according to claim 8, wherein
when the locking member (220S) is locked with the engaged portion (110S), the at least one male buckle (1005) is restricted from being separated from the female buckle (200S); and
when the locking member (220S) is unlocked from the engaged portion (110S), the at least one male buckle (1005) is allowed to be separated from the female buckle (200S).

10. The buckle (1000S) according to any one of claims 8 or 9, wherein
the locking member (220S) has an engaging portion (221S), the locking member (220S) is movably disposed within the female buckle (200S) and having a first position and a second position;
when the locking member (220S) is in the first position, the engaging portion (221S) is located on a moving path of the engaged portion (110S) and is locked with the engaged portion (110S); when the locking member (220S) is in the second position, the engaging portion (221S) is offset from the moving path of the engaged portion (110S) and is unlocked from the engaged portion (110S).

11. The buckle (1000S) according to claim 10, wherein the engaging portion (2215) has an actuated surface (2212S), during a process that the male buckle (100S) and the female buckle (200S) approach to each other to be mated, the actuated surface (2212S) is capable of being pushed by the engaged portion (1105) to drive the locking member (220S) to move from the first position to the second position.

12. The buckle (1000S) according to any one of claims 10 or 11, wherein
the engaging portion (221S) is provided with a driving inclined surface (2211S);
the engaged portion (110S) is provided with a mating inclined surface (111S), the mating inclined surface (111S) is parallel with the driving inclined surface (2211S), and the driving inclined surface (2211S) is inclined towards a main body portion (222S), the engaging portion (221S) pushes the engaged portion (110S) to be elastically deformed through cooperation of the driving inclined surface (2211S) and the mating inclined surface (111S).

13. The buckle (1000S) according to any one of claims 10 to 12, wherein
the locking member (220S) further has a main body portion (222S), the engaging portion (221S) is formed by extending outwardly from the main body portion (222S), the second magnet (500S) is mounted on the main body portion (222S); or
the locking member (220S) further has a main body portion (222S), when the engaging portion (221S) is locked with the engaged portion (110S), the engaged portion (110S) is located between the engaging portion (221S) and the main body portion (222S), and an avoidance gap (242S) is provided between the engaged portion (110S) and the main body portion (222S) and/or the engaging portion (221S).

14. The buckle (1000S) according to any one of claims 8 to 13, wherein the locking member (220S) is provided with a pushed inclined surface (2222S), the operation member (300S) is provided with an abutting pushing portion (321S), and the abutting pushing portion (321S) is adapted to drive and cooperate with the pushed inclined surface (2222S) to drive the locking member (220S) to be unlocked from the engaged portion (110S).

15. The buckle (1000S) according to any one of claims 8 to 14, wherein
the locking member (220S) is provided with at least two pushed inclined surfaces (2222AS, 2222AS);
the operation member (300S) is provided with at least two abutting pushing portions (321AS, 321BS), the at least two abutting pushing portions (321AS, 321BS) are spaced apart along a moving direction of the operation member (300S), the at least two abutting pushing portions (321AS, 321BS) correspond to and are capable of abutting against the at least two pushed inclined surfaces (2222AS, 2222AS), respectively, and/or
wherein the operation member (300S) comprises:
an operating end (310S) protruding out of the female buckle (200S); and
an arm portion (320S) connected to the operating end (310S), the arm portion (320S) being provided with the at least two abutting pushing portions (321AS, 321BS) spaced apart along its length direction, the length direction of the arm portion (320S) being the same as the moving direction of the operation member (300S), and/or
wherein the arm portion (320S) has an avoidance notch (322S), the avoidance notch (322S) divides the arm portion (320S) into a first pushing arm (323S) and a second pushing arm (324S) spaced apart along a first direction (F1), at least one of the first pushing arm (323S) and the second pushing arm (324S) is provided with the at least two abutting pushing portions (321AS, 321BS).
